(19) Europäisches Patentamt

European Patent Office

Office européen des brevets

(11) **EP 4 404 095 B1**

## (12) EUROPÄISCHE PATENTSCHRIFT

(45) Veröffentlichungstag und Bekanntmachung des Hinweises auf die Patenterteilung:
**19.11.2025 Patentblatt 2025/47**

(21) Anmeldenummer: **23152043.8**

(22) Anmeldetag: **17.01.2023**

(51) Internationale Patentklassifikation (IPC):
***G06F 21/62*** (2013.01)

(52) Gemeinsame Patentklassifikation (CPC):
**G06F 21/6254**

(54) **ANONYMISIEREN VON DATEN**

ANONYMIZATION OF DATA

ANONYMISATION DE DONNÉES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**24.07.2024 Patentblatt 2024/30**

(73) Patentinhaber: **Siemens Healthineers AG 91301 Forchheim (DE)**

(72) Erfinder:
• **Cuellar Jaramillo, Jorge Ricardo 82065 Baierbrunn (DE)**
• **Rosenbaum, Ute 87437 Kempten (DE)**

(74) Vertreter: **Siemens Healthineers Patent Attorneys Postfach 22 16 34 80506 München (DE)**

(56) Entgegenhaltungen:
• **JI-WON BYUN ET AL: "Secure Anonymization for Incremental Datasets", 1 January 2006, SECURE DATA MANAGEMENT LECTURE NOTES IN COMPUTER SCIENCE;;LNCS, SPRINGER, BERLIN, DE, PAGE(S) 48 - 63, ISBN: 978-3-540-38984-2, XP019040079**
• **VITO DI GESU ET AL: "AN APPLICATION OF INTEGRATED CLUSTERING TO MRI SEGMENTATION", PATTERN RECOGNITION LETTERS, ELSEVIER, AMSTERDAM, NL, vol. 15, no. 7, 1 July 1994 (1994-07-01), pages 731 - 738, XP000453039, ISSN: 0167-8655, DOI: 10.1016/ 0167-8655(94)90078-7**

# EP 4 404 095 B1

**Beschreibung**

TECHNISCHES GEBIET

Die vorliegende Erfindung betrifft Verfahren und Vorrichtungen zum Anonymisieren von Daten. Die vorliegende Erfindung betrifft insbesondere ein Computer-implementiertes Verfahren zum Anonymisieren von Daten mittels Generalisierung sowie eine entsprechende Vorrichtung.

HINTERGRUND DER ERFINDUNG

Anonymisierung betrifft das Verändern personenbezogener Daten derart, dass diese Daten nicht mehr oder nur mit einem unverhältnismäßig großen Aufwand an Zeit, Kosten und Arbeitskraft einer bestimmten oder bestimmbaren natürlichen Person zugeordnet werden können.

In dieser Beschreibung sind unabhängig vom grammatikalischen Geschlecht eines bestimmten Begriffs Personen mit männlicher, weiblicher oder anderer Geschlechteridentität mit umfasst.

Zum Beispiel kann eine Institution oder eine Gruppe von Institutionen personenbezogene Daten von natürlichen Personen für einen Hauptzweck sammeln und möchte die Daten neben diesem Hauptzweck auch für weitere Zwecke, sogenannte sekundäre Zwecke, verwenden. Z.B. möchte sie die Informationen beispielsweise an weitere Institutionen weitergeben. Zum Beispiel sammelt eine Gruppe von Leistungserbringern (z. B. Krankenhäuser) personenbezogene Daten von Patienten, um die Patienten zu behandeln. Diese Daten können persönliche Daten, wie Name, Geburtsdatum, Adresse und dergleichen, sowie Gesundheitsdaten, wie Art der Erkrankung, Blutwerte, Röntgenbilder etc., umfassen. Die Leistungserbringer möchten die Daten dann zur Förderung der klinischen Forschung verwenden, zum Beispiel für klinische Studien. Nach der DatenschutzGrundverordnung (DS-GVO) und anderen Vorschriften ist dies nur unter sehr strengen Bedingungen möglich. In diesem Zusammenhang sind Techniken zur Anonymisierung sehr hilfreich, da anonymisierte Daten nicht mit einer identifizierbaren Person (oder "betroffenen Person") in Verbindung gebracht werden und daher nicht mehr durch die Datenschutzbestimmungen geschützt sind.

Ein Grundsatz dieser Datenschutzbestimmungen ist die Datenminimierung, die besagt, dass immer dann, wenn personenbezogene Daten für einen bestimmten Hauptzweck benötigt werden, die Menge der erhobenen oder verarbeiteten Daten auf das Maß beschränkt werden muss, das im Verhältnis zu den Zwecken, für die sie verarbeitet werden, erforderlich ist. Dies gilt insbesondere für personenbezogene Gesundheitsdaten, die sehr strengen Vorschriften zum Schutz der Privatsphäre und des Datenschutzes unterliegen, wie z. B. der GDPR (General Data Protection Regulation) in der EU oder dem HIPAA (Health Insurance Portability and Accountability Act) in den USA.

Eine Technik, die zur Einhaltung des Grundsatzes der Datenminimierung beiträgt, ist die Anonymisierung, bei der die für die Datenverarbeitung zuständigen Personen keinen Zugang zu den tatsächlichen Identitätsangaben oder den tatsächlichen Werten der Datenattribute benötigen, die minimierten Daten aber dennoch für die festgelegten Zwecke, insbesondere für die oben genannten sekundären Zwecke, nützlich sind.

In den meisten Fällen werden viele personenbezogene Daten in strukturierten Formaten als Datensätze mit Attribut-Wert-Paaren erfasst und gespeichert. Einige Beispiele im Bereich der medizinischen Daten sind strukturierte Formate wie DICOM und die HL7-Standards (Health Level 7), zum Beispiel der FHIR-Standard (Fast Healthcare Interoperability Resources). Sie können zur Speicherung von Messwerten von Vitalfunktionen, von Ergebnissen medizinischer Untersuchungen und insbesondere von Informationen aus bildgebenden Geräten (wie z. B. CT, MRT und Ultraschall) verwendet werden.

Gemäß Erwägungsgrund 26 der EU-Datenschutzgrundverordnung sollten die Grundsätze des Datenschutzes nicht für anonyme Informationen gelten, d. h. für Informationen, die sich nicht auf eine identifizierte oder identifizierbare natürliche Person beziehen, oder personenbezogene Daten, die in einer Weise anonymisiert worden sind, dass die betroffene Person nicht oder nicht mehr identifiziert werden kann. Diese Verordnung gilt dann auch nicht mehr für die Verarbeitung solcher anonymer Daten, z.B. für statistische oder für Forschungszwecke.

Eine Datenbank ist anonymisiert, wenn die Identität der betroffenen Personen unbekannt, nicht identifizierbar, nicht zugänglich und nicht nachverfolgbar (nicht aufspürbar) ist. Anonymisierung bezeichnet eine Technik zur Entfernung von Informationen, die dazu verwendet werden könnten, die betroffenen Personen zu identifizieren oder anderweitig mit ihnen in Verbindung zu bringen, oder um sensible Informationen über sie zu erhalten. Anonymisierte Daten sollten sich weder auf eine bestimmte oder bestimmbare natürliche Person beziehen noch auf andere anonymisierte personenbezogene Daten, selbst wenn die betroffene Person nicht oder nicht mehr identifizierbar ist. Anonyme Daten sollten also weder direkt noch indirekt mit den Personen, von denen sie stammen, in Verbindung gebracht werden können. Die Idee ist, dass die daraus resultierenden anonymisierten Daten keinen weiteren Schutz der Privatsphäre erfordern und insbesondere nach einer Freigabe keinen besonderen Mechanismus für die Verwaltung von Informationen und Zusammenhängen erfordern. Es muss (nahezu) unmöglich sein, Informationen abzuleiten, d. h. mit erheblicher Wahrscheinlichkeit den Wert eines Attributs aus den Werten einer Reihe anderer Attribute abzuleiten.

2

Eine sehr bekannte und weit verbreitete Methode ist die k-Anonymisierung und verwandte Techniken, die mit Konzepten wie t-closeness, l-diversity und Differential Privacy zusammenhängen. k-Anonymität ist eine einfache und leicht anwendbare Technik. Die Grundlage ist, dass die Datensätze der verschiedenen Subjekte (z.B. Personen) mit einer der Techniken "Unterdrückung" (engl. "suppression") und "Generalisierung" (engl. "generalization") so verändert werden, dass jeder Datensatz, der einem Subjekt (also einer Person) entspricht, von einer relativ großen Menge anderer Subjekte nicht mehr unterschieden werden kann. Genauer gesagt ist die Anonymitätsmenge die Menge der Subjekte, die dieselben Attribute aufweisen, so dass sie innerhalb des angegebenen Kontexts nicht voneinander unterschieden werden können. "Relative Anonymisierung" bedeutet diese Ununterscheidbarkeit aus der Sicht einer bestimmten Gruppe von Beobachtern, denen die anonymisierte Datenbank offengelegt wird.

Daher werden die Subjekte in den Anonymitätsgruppen, wenn diese Gruppen groß genug sind - bei einer k-Anonymisierung enthalten sie mindestens eine Anzahl k von Subjekten - als anonym oder genauer gesagt als k-anonym betrachtet.

Wenn die gesamte Datenbank jedoch nicht von vornherein bekannt ist, können die bestehenden Methoden nicht angewendet werden. Mit anderen Worten, um die bestehenden Methoden anzuwenden, muss man warten, bis alle Daten aller Probanden in die Datenbank eingegeben sind, um zu analysieren, wie groß die Anonymisierungsmengen für bestimmte Grade der Unterdrückung oder Generalisierung sein werden. In einigen Fällen sind die Daten daher für einen relativ langen Zeitraum nicht nutzbar, z.B. bis alle Daten gesammelt und erfasst wurden.

Die Publikation "AN APPLICATION OF INTEGRATED CLUSTERING TO MRI SEGMENTATION" von VITO DI GESU ET AL (PATTERN RECOGNITION LETTERS, ELSEVIER, AMSTERDAM, NL, Bd. 15, Nr. 7, 1. Juli 1994 (1994-07-01), Seiten 731-738, XP000453039, ISSN: 0167-8655, DOI: 10.1016/0167-8655(94)90078-7) behandelt den Einsatz von Magnetresonanztomographie (MRT) bei computergestützten Diagnoseverfahren. MRT-Bilder sind multidimensional, sodass Radiologen verschiedene Informationsquellen kombinieren müssen, um Gewebe für Diagnosen zu klassifizieren. Es werden vier automatische Clusterverfahren beschrieben und deren Integration in einem "Information Fusion Clustering"-Ansatz, der bei der vorläufigen Segmentierung und Klassifikation von Körpergewebe unterstützt.

Der Artikel "Secure Anonymization for Incremental Datasets" von JI-WON BYUN ET AL (1. Januar 2006 (2006-01-01), SECURE DATA MANAGEMENT LECTURE NOTE$ IN COMPUTER SCIENCE; LNCS, SPRINGER, BERLIN, DE, PAGE($) 48 - 63, XP019040079, ISBN: 978-3-540-38984-2) behandelt die k-Anonymität und l-Diversität für inkrementelle, kontinuierlich wachsende Datensätze zu gewährleisten. Der Artikel schlägt eine Methode vor, die eine Anonymisierung wachsender Datensätze ermöglicht, ohne redundante Berechnungen zu verursachen.

ZUSAMMENFASSUNG

Eine Aufgabe der vorliegenden Erfindung ist daher, ein automatisiertes Verfahren zur Anonymisierung von Datenbanken bereitzustellen, welches auch dann angewendet werden kann, wenn noch nicht alle Einträge der Datenbank bekannt sind, sondern die Daten von verschiedenen Subjekten erst im Laufe der Zeit eingegeben werden.

Gemäß der vorliegenden Erfindung wird diese Aufgabe durch ein Computer-implementiertes Verfahren zum Anonymisieren von Daten und eine Vorrichtung zum Anonymisieren von Daten gelöst, wie sie in den unabhängigen Ansprüchen definiert sind. Die abhängigen Ansprüche definieren Ausführungsformen der Erfindung.

Unabhängig vom grammatikalischen Geschlecht eines bestimmten Begriffes sind Personen mit männlicher, weiblicher oder anderer Geschlechteridentität mit umfasst.

Gemäß der vorliegenden Erfindung wird ein Computer-implementiertes Verfahren zum Anonymisieren von Daten mittels Generalisierung bereitgestellt. Die Daten umfassen zu einem ersten Zeitpunkt eine erste Anzahl von ersten Datensätzen und zu einem zweiten Zeitpunkt eine zweite Anzahl von zweiten Datensätzen. Der zweite Zeitpunkt ist beispielsweise zeitlich nach dem ersten Zeitpunkt, d.h., der zweite Zeitpunkt ist ein späterer Zeitpunkt als der erste Zeitpunkt. Die ersten Datensätze sind eine Teilmenge der zweiten Datensätze, insbesondere sind die ersten Datensätze eine echte Teilmenge der zweiten Datensätze. Anders ausgedrückt liegen zum ersten Zeitpunkt weniger Daten vor als zum zweiten Zeitpunkt. Zum ersten Zeitpunkt liegen lediglich die ersten Datensätze vor, während zum zweiten Zeitpunkt die ersten Datensätze und weitere Datensätze vorliegen, wobei die ersten Datensätze und die weiteren Datensätze zusammengenommen die zweiten Datensätze bilden. Ein Abstand zwischen dem ersten Zeitpunkt und dem zweiten Zeitpunkt kann mehrere Tage oder Wochen betragen und es kann sein, dass bereits zum oder kurz nach dem ersten Zeitpunkt eine weitere Verarbeitung der Daten für sekundäre Zwecke durchgeführt werden soll, weshalb bereits zum ersten Zeitpunkt eine Anonymisierung erforderlich ist. Das Verfahren umfasst ein Erzeugen einer ersten Generalisierung für die ersten Datensätze, die eine geforderte Anonymisierung erfüllt. Die geforderte Anonymisierung kann beispielsweise eine k-Anonymität, t-closeness oder l-diversity sein. Die erste Generalisierung umfasst eine erste Gruppe von Zuordnungsbereichen, mit denen Werte eines Quasi-Identifikators der Daten generalisiert werden. Die Zuordnungsbereiche können beispielsweise Werteintervalle sein, mit denen die Werte des Quasi-Identifikators abstrahiert werden. Die Zuordnungsbereiche können auch mehrdimensionale Bereiche sein, welche Wertebereichen mehrerer Quasi-Identifikatoren zugeordnet sind, wobei jeder Dimension des Zuordnungsbereichs ein Quasi-Identifikator der mehreren Quasi-Identifikatoren zugeordnet ist. Auf der Grundlage dieser ersten Generalisierung können die ersten Datensätze bereits anonymisiert und somit anonym weiterverarbeitet werden. Das Verfahren umfasst ferner ein Erzeugen einer zweiten Generalisierung für die zweiten Datensätze, die die geforderte Anonymisierung erfüllt. Zum Beispiel kann die zweite Generalisierung erzeugt werden, wenn zum zweiten Zeitpunkt die zweiten Datensätze vorliegen. Die zweite Generalisierung umfasst eine zweite Gruppe von Zuordnungsbereichen, mit denen Werte des Quasi-Identifikators generalisiert werden. Die zweite Gruppe von Zuordnungsbereichen umfasst mehr Zuordnungsbereiche als die erste Gruppe von Zuordnungsbereichen. Jede Generalisierung weist somit die gewünschte Anonymisierung auf, sodass bereits zum ersten Zeitpunkt die bis dahin gesammelten ersten Datensätze in ausreichend anonymisierter Form weiterverarbeitet werden können. Sobald weitere Datensätze gesammelt wurden, können diese mit der zweiten Generalisierung anonymisiert werden und somit sukzessive der weiteren Verarbeitung zur Verfügung gestellt werden.

Es ist klar, dass das Verfahren nicht auf eine erste und zweite Generalisierung zu einem ersten Zeitpunkt und zweiten Zeitpunkt beschränkt ist, sondern dass das Verfahren für weitere Generalisierungen, z.B. eine dritte Generalisierung und eine vierte Generalisierung usw. verwendet werden kann, um jeweils die zu den jeweiligen Zeitpunkten vorliegende Gesamtheit von Datensätzen zu anonymisieren und für die weitere Verarbeitung bereitzustellen. Indem die zweite oder weiteren Gruppe von Zuordnungsbereichen der zweiten oder weiteren Generalisierung zunehmend mehr Zuordnungsbereiche als die erste oder vorhergehende Gruppe von Zuordnungsbereichen der ersten oder vorhergehenden Generalisierung aufweist, kann der aus den anonymisierten Daten gewonnene Nutzen, beispielsweise bei einer Auswertung für eine wissenschaftliche Forschung, mit zunehmender Datenmenge immer weiter steigen.

Zum Beispiel können die Daten zu einem weiteren wiederum späteren Zeitpunkt eine weitere Anzahl von weiteren Datensätzen umfassen. Die weiteren Datensätze sind eine Obermenge von vorhergehenden Datensätzen zu einem vorhergehenden Zeitpunkt, vorzugsweise eine echte Obermenge. Gemäß dem Verfahren wird eine weitere Generalisierung für die weiteren Datensätze auf der Grundlage einer vorhergehenden Generalisierung erzeugt. Die weitere Generalisierung umfasst zur Generalisierung des Quasi-Identifikators eine weitere Gruppe von Zuordnungsbereichen für den Quasi-Identifikator. Die weitere Gruppe umfasst mehr Zuordnungsbereiche als eine vorhergehende Gruppe von Zuordnungsbereichen der vorhergehenden Generalisierung. Die vorhergehende Generalisierung ist zum Beispiel die zweite Generalisierung oder eine auf der zweiten Generalisierung iterativ basierende weitere Generalisierung.

Die Zuordnungsbereiche können beispielsweise so gewählt werden, dass für jeden Wert des Quasi-Identifikators gilt, dass der Wert höchstens einem der Zuordnungsbereiche der ersten Gruppe zugeordnet ist, und dass für jeden Wert des Quasi-Identifikators gilt, dass der Wert höchstens einem der Zuordnungsbereiche der zweiten Gruppe zugeordnet ist. Indem die Zuordnungsbereiche so gewählt werden, dass jeder Wert des Quasi-Identifikators lediglich einem der Zuordnungsbereiche der jeweiligen Gruppe zugeordnet wird, kann auf einfache Art und Weise beispielsweise eine gewünschte k-Anonymität erreicht werden.

Weiterhin kann eine Wertemenge, welche der Gesamtheit der Zuordnungsbereiche der ersten Gruppe zugeordnet ist, gleich einer Wertemenge sein, welche der Gesamtheit der Zuordnungsbereiche der zweiten Gruppe zugeordnet ist. Auch wenn es zum ersten Zeitpunkt aufgrund der geringeren Anzahl von ersten Datensätzen und der somit eventuell beschränkten Wertemenge nicht erforderlich ist, die erste Gruppe der Zuordnungsbereiche so umfassend zu gestalten, dass sie weit über die Wertemenge der ersten Datensätze hinausgeht, kann dies sinnvoll sein, um einerseits möglichst wenig Änderungen bei einer nachfolgenden Verarbeitung der anonymisierten Daten zu bewirken und andererseits keine Rückschlüsse auf sensitive Daten zuzulassen, die durch die Vergrößerung der Gesamtheit der Zuordnungsbereiche möglich wären.

In weiteren Beispielen gilt für jeden Zuordnungsbereich der zweiten Gruppe, dass eine Wertemenge des jeweiligen Zuordnungsbereichs eine Teilmenge von einer Wertemenge von genau einem Zuordnungsbereich der ersten Gruppe ist. Es ist zu beachten, dass dies keine echten Teilmengen sein müssen, d.h., für einige Zuordnungsbereiche der zweiten Gruppe kann gelten, dass diese identisch zu einem entsprechenden Zuordnungsbereich der ersten Gruppe sind. Einige Zuordnungsbereiche der zweiten Gruppe sind jedoch echte Teilmengen von genau einem Zuordnungsbereich der ersten Gruppe. Anders ausgedrückt erstreckt sich ein Zuordnungsbereich der zweiten Gruppe niemals über zwei Zuordnungsbereiche der ersten Gruppe. Demzufolge entspricht ein Zuordnungsbereich der zweiten Gruppe entweder genau einem entsprechenden Zuordnungsbereich der ersten Gruppe, oder ein Zuordnungsbereich der ersten Gruppe wird in zwei oder mehr Zuordnungsbereiche der zweiten Gruppe aufgeteilt. Dadurch kann sichergestellt werden, dass auch durch eine gemeinsame Betrachtung der Zuordnung der Daten in zunächst die Zuordnungsbereiche der ersten Gruppe und später in die Zuordnungsbereiche der zweiten Gruppe die gewünschte Anonymität sicherstellt.

Beispielsweise ist einem jeweiligen Zuordnungsbereich der ersten Gruppe ein jeweiliges Intervall von Werten (z.B. Alter oder Postleitzahlen) zugeordnet ist. Die Intervalle der ersten Gruppe weisen voneinander unabhängige Intervalllängen auf. Eine jeweilige Intervalllänge eines jeweiligen Intervalls der ersten Gruppe hängt von einer Anzahl von Datensätzen der ersten Datensätze ab, die diesem Intervall zugeordnet sind. Dadurch kann, zumindest in Bezug auf ein in dem jeweiligen Zuordnungsbereich zugeordnetes Attribut der ersten Datensätze, auf einfache Art und Weise eine gewünschte Generalisierung, beispielsweise K-Anonymität, erreicht werden.

Bei weiteren beispielhaften Verfahren wird eine statistische Verteilung von Werten des Quasi-Identifikators bestimmt. Die Bestimmung erfolgt beispielsweise auf der Grundlage von weiteren Daten, die Datensätze umfassen, die den Quasi-Identifikator umfassen. Die weiteren Daten können unabhängig von den oben genannten Daten erfasst worden sein, beispielsweise in einer anderen klinischen Studie oder in einem anderen Zusammenhang. Diese weiteren Daten umfassen jedoch als ein Attribut den Quasi-Identifikator, sodass eine statistische Verteilung von Werten dieses Quasi-Identifikators bestimmt werden kann. Unter der Annahme, dass diese statistische Verteilung auch für die oben genannten mit dem vorliegenden Verfahren zu verarbeitenden Daten zumindest langfristig zutreffen, wird eine Ziel-Generalisierung auf der Grundlage der statischen Verteilung erzeugt. Die Ziel-Generalisierung umfasst eine Ziel-Gruppe von Zuordnungsbereichen, mit denen Werte eines Quasi-Identifikators der Daten generalisiert werden. Die erste Generalisierung und/oder die zweite Generalisierung werden zusätzlich in Abhängigkeit von der Ziel-Generalisierung erzeugt.

In weiteren Beispielen umfasst jeder Zuordnungsbereich der ersten Gruppe einen mindestens zweidimensionalen Zuordnungsbereich, mit dem Werte des Quasi-Identifikators und Werte von mindestens einem weiteren Quasi-Identifikator der Daten generalisiert werden. Die Generalisierung erfolgt somit auf mindestens zwei Quasi-Identifikatoren. Die Generalisierung kann auch auf mehr als zwei Quasi-Identifikatoren erfolgen. Eine Dimension des Zuordnungsbereichs steigt entsprechend an. Bei drei Quasi-Identifikatoren ergeben sich dreidimensionale Zuordnungsbereiche, bei vier Quasi-Identifikatoren dementsprechend vierdimensionale Zuordnungsbereiche usw.

Jeder Zuordnungsbereich der zweiten Gruppe umfasst einen zwei- oder höherdimensionalen Zuordnungsbereich, mit dem Werte des Quasi-Identifikators und Werte von mindestens einem weiteren Quasi-Identifikator der Daten generalisiert werden. Für die zwei- oder höherdimensionalen Zuordnungsbereiche gilt im Prinzip das gleiche wie für die oben genannten Intervalle, die einem eindimensionalen Fall entsprechen. Beispielsweise können im zweidimensionalen Fall die Zuordnungsbereiche der zweiten Gruppe so ausgestaltet sein, dass sie jeweils vollständig innerhalb eines Zuordnungsbereichs der ersten Gruppe enthalten sind. Anders ausgedrückt überlappen Zuordnungsbereiche der zweiten Gruppe niemals zwei Zuordnungsbereiche der ersten Gruppe. Die Zuordnungsbereiche der zweiten Gruppe sind daher entweder kleiner oder genauso groß wie entsprechende Zuordnungsbereiche der ersten Gruppe. Umgekehrt ausgedrückt wird ein Zuordnungsbereich der ersten Gruppe entweder genau einem Zuordnungsbereich der zweiten Gruppe zugeordnet oder er wird in zwei oder mehr Zuordnungsbereiche der zweiten Gruppe aufgeteilt, wodurch die Anzahl der Zuordnungsbereiche der zweiten Gruppe größer ist als die Anzahl der Zuordnungsbereiche der ersten Gruppe.

Wie weiter oben beschrieben, können auch bei der Verwendung von zwei- oder höherdimensionalen Zuordnungsbereichen Informationen zu den Quasi-Identifikatoren anderer Studien verwendet werden. Beispielsweise können statistische Verteilungen von Werten des Quasi-Identifikators und von Werten des mindestens einen weiteren Quasi-Identifikators bestimmt werden, beispielsweise auf der Grundlage von weiteren Daten aus anderen Studien, die Datensätze umfassen, die den Quasi-Identifikator und den mindestens einen weiteren Quasi-Identifikator umfassen. Auf der Grundlage der statischen Verteilungen kann eine Ziel-Generalisierung erzeugt werden. Die Ziel-Generalisierung umfasst eine Gruppe von zwei- oder höherdimensionalen Zuordnungsbereichen, mit denen Werte des Quasi-Identifikators und des mindestens einen weiteren Quasi-Identifikators generalisiert werden. Die erste Generalisierung und/oder die zweite Generalisierung können zusätzlich in Abhängigkeit von der Ziel-Generalisierung erzeugt werden. Insbesondere wenn beim Erzeugen der Gruppe der ersten Zuordnungsbereiche noch sehr wenige Datensätze zur Verfügung stehen, kann dadurch vermieden werden, dass Grenzen zwischen Zuordnungsbereichen eingerichtet werden, welche später, beispielsweise für die zweite oder dritte Gruppe von Zuordnungsbereichen, zumindest teilweise ungeeignet sind. Dies kann insbesondere bei zwei- oder höherdimensionalen Zuordnungsbereichen im Rahmen der weiteren Verfeinerung auftreten. Die Verwendung dieses "Vorwissens" über Werteverteilungen der Quasi-Identifikatoren aus anderen Studien kann zur Vermeidung solcher späteren Unzulänglichkeiten vorteilhaft eingesetzt werden.

Ein weiterer Aspekt der vorliegenden Erfindung betrifft eine Vorrichtung zum Anonymisieren von Daten mittels Generalisierung. Die Daten können über einen längeren Zeitraum von beispielsweise Tagen, Wochen oder Monaten gesammelt und erfasst werden. Die Daten umfassen daher zu einem ersten Zeitpunkt eine erste Anzahl von ersten Datensätzen und zu einem zweiten späteren Zeitpunkt eine zweite Anzahl von zweiten Datensätzen. Die ersten Datensätze sind eine Teilmenge, vorzugsweise eine echte Teilmenge, der zweiten Datensätze. Die Vorrichtung umfasst eine Verarbeitungsvorrichtung, welche ausgestaltet ist, eine erste Generalisierung für die ersten Datensätze zu erzeugen, die eine geforderte Anonymisierung erfüllt. Die erste Generalisierung umfasst eine erste Gruppe von Zuordnungsbereichen, mit denen Werte eines Quasi-Identifikators der Daten generalisiert werden. Die Verarbeitungsvorrichtung ist ferner ausgestaltet, eine zweite Generalisierung für die zweiten Datensätze zu erzeugen. Die zweite Generalisierung umfasst eine zweite Gruppe von Zuordnungsbereichen, mit denen Werte des Quasi-Identifikators generalisiert werden. Die zweite Generalisierung erfüllt ebenso wie die erste Generalisierung die geforderte Anonymisierung. Die zweite Gruppe von Zuordnungsbereichen umfasst mehr Zuordnungsbereiche als die erste Gruppe von Zuordnungsbereichen.

Die Verarbeitungsvorrichtung umfasst beispielsweise eine Mikroprozessorsteuerung mit einem Speicher und Ein-/ Ausgabevorrichtungen, beispielsweise ein Computersystem oder einen Server. Die zu anonymisierenden Daten können in dem Speicher der Verarbeitungsvorrichtung abgelegt sein. Parameter für die Generalisierung, wie beispielsweise der gewünschte Grad der Anonymisierung, zum Beispiel der gewünschte Wert für k bei einer k-Anonymität, sowie eine Kategorisierung der Attribute der Daten in Identifikatoren, Quasi-Identifikatoren und sensible Attribute können beispielsweise über die Ein-/Ausgabevorrichtungen von beispielsweise einer Bedienperson oder mittels einer entsprechenden Konfigurationsdatei eingestellt werden.

Die Vorrichtung ist somit zur Durchführung des zuvor Verfahrens ausgestaltet und umfasst daher ebenfalls die zuvor beschriebenen Vorteile.

Die vorliegende Erfindung betrifft ferner ein Computerprogrammprodukt, welches einen computerlesbaren Programmcode umfasst, der ausgestaltet ist, eine Verarbeitungsvorrichtung zu veranlassen, die Schritte des zuvor beschriebenen Verfahrens auszuführen.

Die vorliegende Erfindung betrifft auch ein computerlesbares Speichermedium, das ausgestaltet ist, darin ein Computerprogrammprodukt zu speichern, das einen computerlesbaren Programmcode umfasst, der ausgestaltet ist, eine Verarbeitungsvorrichtung zu veranlassen, die Schritte des zuvor beschriebenen Verfahrens auszuführen

Es ist klar, dass die oben erwähnten und die im Folgenden erläuterten Merkmale nicht nur in den jeweils angegebenen Kombinationen, sondern auch in anderen Kombinationen oder isoliert voneinander verwendet werden können, ohne von dem Umfang der Erfindung abzuweichen.

KURZE BESCHREIBUNG DER ZEICHNUNGEN

Die vorliegende Erfindung wird nachfolgend unter Bezugnahme auf die Figuren, welche Ausführungsform der vorliegenden Erfindung darstellen, im Detail beschrieben werden.

FIG. 1    zeigt schematisch einen Zusammenhang zwischen Verfeinerungen von Generalisierungen.

FIG. 2    zeigt schematisch zwei Generalisierungen zu zwei unterschiedlichen Zeitpunkten.

FIG. 3    zeigt schematisch Werte von zwei Quasi-Identifikatoren von einer Menge von Datensätzen.

FIG. 4    zeigt schematisch drei verschiedene Generalisierungen für die Menge von Datensätzen der Fig. 3.

FIG. 5    zeigt schematisch Generalisierungen mit unterschiedlicher Intervallbreite.

FIG. 6    zeigt schematisch zwei Generalisierungen zu zwei verschiedenen Zeitpunkten.

FIG. 7    zeigt schematisch zwei Generalisierungen zu zwei verschiedenen Zeitpunkten.

FIG. 8    zeigt schematisch mögliche Generalisierungen, welche auf einer bestehenden Generalisierung beruhen, sowie eine Ziel-Generalisierung.

FIG. 9    zeigt schematisch mögliche Generalisierungen, welche auf einer bestehenden Generalisierung beruhen, sowie eine Ziel-Generalisierung.

FIG. 10    zeigt schematisch eine Vorrichtung zum Anonymisieren von Daten mittels Generalisierung.

FIG. 11    zeigt schematisch Verfahrensschritte eines Verfahrens zum Anonymisieren von Daten mittels Generalisierung.

DETAILLIERTE BESCHREIBUNG DER AUSFÜHRUNGSFORMEN

Einige Beispiele der vorliegenden Offenbarung betreffen im Allgemeinen eine oder mehrere Schaltungen, Steuervorrichtungen oder andere elektrische Vorrichtungen. Alle Verweise auf die Schaltungen, Steuervorrichtungen und anderen elektrischen Vorrichtungen und die von ihnen bereitgestellte Funktionalität sollen nicht darauf beschränkt sein, nur das zu umfassen, was hier dargestellt und beschrieben ist. Auch wenn den verschiedenen Schaltungen, Steuervorrichtungen und anderen elektrischen Vorrichtungen bestimmte Bezeichnungen zugewiesen werden können, sollen diese nicht den Funktionsumfang der Schaltungen, Steuervorrichtungen und anderen elektrischen Vorrichtungen begrenzen. Solche Schaltungen, Steuervorrichtungen und anderen elektrischen Vorrichtungen können miteinander kombiniert und/oder auf jede beliebige Art und Weise getrennt werden, je nachdem, welche Art von elektrischer Implementierung gewünscht wird. Selbstverständlich kann jede hier offengelegte Schaltung oder andere elektrische Vorrichtung eine beliebige Anzahl von Mikrocontrollern, Grafikprozessoreinheiten (GPU), integrierten Schaltungen, Speicherbausteinen (z. B. FLASH, Direktzugriffsspeicher (RAM), Festwertspeicher (ROM), elektrisch programmierbare Festwertspeicher (EPROM), elektrisch löschbare programmierbare Festwertspeicher (EEPROM) oder andere geeigneten Varianten davon) und Software umfassen, die miteinander zusammenwirken, um die hier offengelegten Operationen, Vorgänge und/oder Verfahrensschritte auszuführen. Darüber hinaus kann eine oder können mehrere der elektrischen Vorrichtungen so ausgestaltet sein, dass sie einen Programmcode ausführen, der in einem nicht transitorischen, computerlesbaren Medium enthalten ist, das so programmiert ist, dass es eine beliebige Anzahl der offengelegten Funktionen ausführt.

Nachfolgend wird zunächst ein Verfahren zur Anonymisierung einer gegebenen Datenmenge ganz allgemein beschrieben. Die Daten können zum Beispiel als große Matrix betrachtet werden, wie in der nachfolgenden Tabelle dargestellt:

| Identifikatoren | | Quasi-Identifikatoren | | | | Sensitive Attribute |
|---|---|---|---|---|---|---|
| Name | Adresse | PLZ | Geburtsdatum | Geschlecht | BMI | Diagnose |
| Herr Müller | Lonestr 1 | 33210 | 23.12.1945 | männlich | 27 | Krebs |
| Herr Abel | Homestr 5 | 335021 | 01.06.1979 | weiblich | 24 | Covid |
| ... | ... | ... | ... | ... | ... | ... |

Die Zeilen der Matrix entsprechen den Datensubjekten, beispielsweise eine Zeile für jede Person. Die Spalten entsprechen den Attributen, beispielsweise Name, Adresse, PLZ, Geburtsdatum oder Alter, Geschlecht, BMI und Diagnose. Jede Zeile der Tabelle stellt einen Datensatz dar, der sich auf ein bestimmtes Subjekt bezieht, und die Werte in den verschiedenen Spalten sind die Werte der mit diesen Subjekten verbundenen Attribute. Jedes Attribut wird wiederum in eine der drei folgenden Klassen eingeteilt:

- Identifikatoren: Dies sind Attribute, die - für sich allein genommen - normalerweise Personen identifizieren, wie Name, Adresse, Telefonnummer, Ausweisnummer.

- Quasi-Identifikatoren: Dies sind Attribute, die in ihrer Kombination und der Verknüpfung dieser Kombination mit externen Informationen zur Identifizierung von Personen verwendet werden können. D.h., selbst wenn ein solches Feld allein die Person nicht identifiziert, ist die Kombination von mehreren dieser Attribute problematisch. Zum Beispiel kann angesichts von Geburtsdatum, Postleitzahl und Gewicht oder BMI einer Person kann die Wahrscheinlichkeit der Identifizierung der Person sehr hoch sein.

- Sensible Attribute: dies sind Attribute, die persönliche Informationen enthalten, die nicht öffentlich mit einer Person/einem Nutzer/einer Kennung verknüpft werden sollten, wie z. B. Diagnose, Gehalt usw.

Zum Erreichen der k-Anonymität werden die Werte der Attribute der Identifikatoren eliminiert (zum Beispiel gelöscht oder durch zufällige Werte ersetzt) und die Werte der Attribute der Quasi-Identifikatoren (und teilweise auch die Werte der sensiblen Attribute) werden generalisiert (d.h. verallgemeinert), indem der Datenwert durch einen weniger präzisen Wert ersetzt wird, der semantisch konsistent ist, oder unterdrückt, indem die Information eliminiert wird. Das Ersetzen eines Datenwerts durch einen weniger präzisen Wert wird auch als "abstrahieren" des Datenwerts bezeichnet. Zum Beispiel kann das Alter einer Person in Jahren, z.B. "52", durch einen weniger präzisen Altersbereich, z.B. "50 bis 60" abstrahiert werden.

Unter der Annahme, dass die möglichen Datenwerte für das Alter von Patienten in einer medizinischen Studie 0 bis 120 Jahre betragen kann, ist zum Beispiel für die Zwecke einer Studie lediglich ein Alter zwischen 40 und 100 Jahren interessant.

Eine Unterdrückung (englisch: *suppression*) dieser Information ist gleichbedeutend mit der Aussage, dass das Alter im Bereich [0,120[ liegt, d. h. es wird keine Information über das Alter wiedergegeben. Eine Generalisierung (englisch: *generalization*) kann beispielsweise durch Altersintervalle erfolgen.

In Bezug auf die Festlegung von Intervallen wird in dieser Beschreibung folgende Definition verwendet: *[a,b[* ist ein halboffenes Intervall, das den ersten Wert a einschließt und den letzten Wert *b* nicht einschließt. Obwohl in dieser Beschreibung hauptsächlich halboffene Intervalle der Form *[a,b[* verwendet werden, sind die hierin beschriebenen Verfahren nicht darauf beschränkt. Es können ebenso halboffene Intervalle ]a,b] verwendet werden, die den ersten Wert a nicht einschließen und den letzten Wert *b* einschließen. Weiterhin können beispielsweise abwechselnd offene und geschlossene Intervalle verwendet werden. Zu beachten ist, dass bei der Wahl der Intervalle zu vermeiden ist, dass ein Wert in zwei oder mehr Intervallen enthalten ist oder relevante Werte in keinem Intervall enthalten sind.

Eine mögliche Generalisierung besteht zum Beispiel darin, nur das Intervall [40,100[ zu verwenden und alle Datensätze zu unterdrücken (zu löschen), die nicht in diesem Intervall liegen.

Anhand eines Beispiels mit Intervallen, die sich auf das Alter beziehen, wird nachfolgend beschrieben, wie Generalisierungen "verfeinert" werden können und welche Bedingungen gelten, damit eine Generalisierung "feiner als" eine andere Generalisierung ist. Die Begriffe "verfeinern" und "feiner als" werden im weiteren Verlauf dieser Beschreibung gemäß der nachfolgenden Definition verwendet werden.

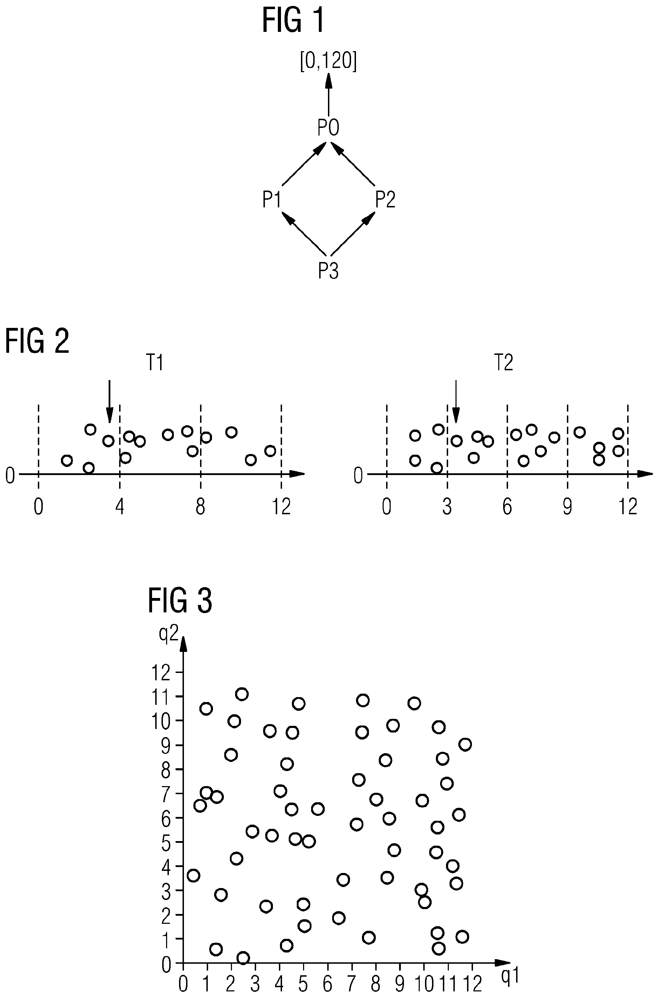

In dem nachfolgend beschriebenen Beispiel werden unter Bezugnahme auf FIG. 1 verschiedene Generalisierungen P0 bis P3 verwendet, welche verschiedene Aufteilungen des Altersintervalls [40,100[ aufweisen.

Die Generalisierung P0 bezeichnet eine Menge, welche nur ein Intervall enthält: P0={[40,100[}.

Die Generalisierung P1 enthält eine Menge von sechs Intervallen:

```
P1 = {[40,50[, [50,60[, [60,70[, [70,80[, [80,90[, [90,100[}.
```

Die Generalisierung P2 enthält eine Menge von vier Intervallen:

```
P2 = {[40,55[, [55,70[, [70,85[, [85,100[}.
```

Es ist zu beachten, dass die Intervalle einer Generalisierung nicht überlappend sind, d.h., es gibt keinen Wert, welcher zwei Intervallen einer Generalisierung zugeordnet werden kann. Somit kann jeder Wert eines Quasi-Identifikators genau einem Intervall einer Generalisierung zugeordnet werden.

Jede der Generalisierungen P0, P1 und P2 stellt eine Generalisierung gegenüber den konkreten Alterswerten dar. Konkrete Alterswerte sind beispielsweise genaue Altersangaben in Jahren, also beispielsweise ein Alter von 36 Jahren oder ein Alter von 52 Jahren. Bei einer Generalisierung der konkreten Alterswerte wird der Alterswert eines jeden Datensatzes einem der Werteintervalle der Generalisierung zugewiesen. Zum Beispiel wird der Alterswert 52 bei Verwendung der Generalisierung P0 dem einzigen Intervall [40,100[ zugewiesen. Bei Verwendung der Generalisierung P1 wird der Alterswert 52 dem Intervall [50,60[ zugewiesen, und bei Verwendung der Generalisierung P2 wird der Alterswert 52 dem Intervall [40,55[ zugewiesen.

Im Sinne der vorliegenden Beschreibung ist eine Generalisierung X dann und nur dann *feiner als* eine andere Generalisierung Y, wenn jedes Intervall in X in genau einem Intervall in Y enthalten ist. Die Generalisierung P1 ist daher feiner als die Generalisierung P0. Ebenso ist die Generalisierung P2 feiner als Generalisierung P0. Aber, obwohl die Generalisierung P1 kleinere Intervalle als die Generalisierung P2 aufweist, ist die Generalisierung P1 nicht feiner als die Generalisierung P2, da beispielsweise das Intervall [50,60[ der Generalisierung P1 nicht vollständig in genau einem Intervall der Generalisierung P2 enthalten ist. Ebenso ist die Generalisierung P2 nicht feiner als die Generalisierung P1.

Die Generalisierung P3 enthält eine Menge von zwölf Intervallen:

P3 = {[40, 45 [, [45, 50[, [50,55[, ... [85,90[, [90,95[, [95,100[}

Die Generalisierung P3 ist feiner als die Generalisierung P2 und auch feiner als die Generalisierung P1. Jedes der Intervalle in P3 ist in einem Intervall von P1 enthalten und jedes der Intervalle von P3 ist auch in einem Intervall von P2 enthalten. FIG. 1 veranschaulicht diesen Zusammenhang grafisch. Ein Pfeil bedeutet, dass der Ausgangspunkt des Pfeils einer Generalisierung zugeordnet ist, die feiner als eine Generalisierung ist, die dem Endpunkt des Pfeils zugeordnet ist.

Ferner besagt in der FIG. 1 ein Pfeil zwischen den Intervallmengen P3 und P1 zum Beispiel, dass eine Anonymisierung mit den Intervallen von P3 genauere Informationen für einen sekundären Zweck liefert als eine Anonymisierung mit P1.

Jede Kombination von Quasi-Identifikatoren, die in der obigen Tabelle auftaucht, bestimmt eine Anonymisierungsmenge. Die Subjekte (z.B. Personen) mit identischen Quasi-Identifikatoren nach der Anonymisierung, also gleichen Werten der generalisierten Quasi-Identifikatoren sind ununterscheidbar. Die Anonymisierungsmengen werden auch Äquivalenzklassen genannt.

Zum Beispiel wird bei der k-Anonymisierung die Generalisierung und/oder Unterdrückung ausgewählt, um zu erreichen, dass alle Anonymisierungsmengen mindestens k Subjekte enthalten.

Wird ein Attribut unterdrückt, so kann es beispielsweise in den Daten, die für eine weitere Verarbeitung, beispielsweise eine Studie oder andere sekundäre Zwecke, weitergegeben werden, gelöscht werden oder die Werte dieses Attribut in allen Datensätzen auf einen vorgegebenen Wert gesetzt werden, welcher anzeigt, dass dieses Attribut keine verwendbare Information enthält. Wird ein Attribut generalisiert, so wird der konkrete Wert des Attributs durch einen abstrahierten Wert ersetzt, beispielsweise durch einen Wert, der anzeigt, in welchem Intervall sich der eigentliche konkrete Wert des Datensatzes befindet. Wenn beispielsweise die oben definierten zwölf Intervalle der Generalisierung P3 mit den Buchstaben A, B, C, ... L bezeichnet werden, kann beispielsweise ein konkretes Alter von 52 Jahren in einem Datensatz durch den Buchstaben C, welcher das Intervall [50,55[ bezeichnet, ersetzt werden. Intervalle stellen eine Möglichkeit für die Generalisierung dar. Durch die Generalisierung findet eine Abstraktion der Werte statt. Es gibt eine Zuordnung zwischen den Werten des Intervalls und einer Bezeichnung für das Intervall, die den Abstraktionswert für die Werte in dem Intervall darstellt. Werden mehrere Größen gleichzeitig generalisiert, beispielsweise n Größen, so kann eine entsprechende Abstraktion für einen entsprechenden n-dimensionalen Bereich erfolgen. Für zwei Größen können diese Bereiche als Flächen, vorzugsweise Rechtecke, angesehen werden. Ganz allgemein wird in dieser Beschreibung ein solcher n-dimensionaler Bereich als Zuordnungsbereich bezeichnet, der beispielsweise im eindimensionalen Fall einem Intervall entspricht und im zweidimensionalen Fall einer Fläche.

Neben der k-Anonymisierung gibt es weitere ähnliche Methoden wie t-closeness und l-diversity. Die hierin vorgeschlagenen Techniken sind auch direkt auf diese anwendbar. Die drei genannten Methoden (k-Anonymisierung, t-closeness und l-diversity) werden jedoch üblicherweise nur angewendet, wenn die zu anonymisierende Datenbank vor der Anonymisierung vollständig bekannt ist. Um die Methoden anzuwenden, wenn die Daten über einen langen Zeitraum gesammelt werden, wird daher üblicherweise gewartet, bis alle Daten gesammelt wurden, bevor man mit der Unterdrückung und Generalisierung fortfährt.

Nachfolgend werden Techniken zur Anonymisierung, insbesondere zur k-Anonymisierung, beschrieben, die es ermöglichen, Datenbanken automatisch zu anonymisieren, insbesondere eine k-Anonymisierung zu erreichen, auch wenn nicht alle Einträge der Datenbank a priori bekannt sind, sondern die Einträge für verschiedene Subjekte erst im Laufe der Zeit eingegeben werden. Anders ausgedrückt ermöglichen diese Techniken, die Daten anonymisieren, auch wenn anfangs nicht alle Daten vorhanden sind.

Bei einem ersten beispielhaften Verfahren wird eine Datenbank zu verschiedenen Zeitpunkten anonymisiert. Zu den verschiedenen Zeitpunkten werden jeweilige "Schnappschüsse" der Datenbank erstellt und eine entsprechende Anonymisierung durchgeführt. Zwischen den jeweiligen Schnappschüssen wächst die Datenbank, d.h., es kommen Datensätze hinzu. Eine jeweilige Anonymisierung eines Schnappschusses erfolgt jeweils auf der Gesamtheit der zu diesem Zeitpunkt verfügbaren nicht-anonymisierten Datensätzen.

Zum Beispiel enthält die Datenbank zu einem ersten Zeitpunkt eine erste Anzahl von ersten Datensätzen und zu einem zweiten späteren Zeitpunkt eine zweite Anzahl von zweiten Datensätze. Die Menge der ersten Datensätze ist eine echte Teilmenge der Menge der zweiten Datensätze. Für die ersten Datensätze wird eine erste Generalisierung durchgeführt, die beispielsweise eine geforderte k-Anonymität erfüllt. Dazu werden, wie oben beschrieben, Werte von Quasi-Identifikatoren der Datenbank generalisiert, zum Beispiel indem konkrete Werte durch Angabe eines Wertebereichs aus einer Gruppe von Wertebereichen ersetzt werden. Anders ausgedrückt wird für diese erste Generalisierung eine Gruppe von Zuordnungsbereichen, beispielsweise Werteintervalle für beispielsweise das Alter, definiert und in jedem Datensatz anstatt des konkreten Wertes lediglich der dem konkreten Wert zugeordnete Zuordnungsbereich vermerkt. Die so generalisierte Datenbank kann eine geforderte Anonymisierung erfüllen und daher für andere sekundäre Zwecke verwendet werden, beispielsweise klinische Studien, ohne gegen Anforderungen des Datenschutzes zu verstoßen. Die originale Datenbank, also die Datenbank vor der Generalisierung, kann im Laufe der Zeit um weitere Datensätze erweitert werden. Beispielsweise können im Laufe von einigen Tagen, Wochen oder Monaten etliche Datensätze hinzugefügt werden. Zu dem späteren zweiten Zeitpunkt kann für die Menge der dann verfügbaren Datensätze eine zweite Generalisierung durchgeführt werden, welche ebenfalls die geforderte Anonymisierung, beispielsweise die oben genannte k-Anonymisierung erfüllt. Wiederum werden dazu Werte von Quasi-Identifikatoren der Datenbank zu diesem Zeitpunkt generalisiert. Da nun mehr Datensätze zur Verfügung stehen, kann die zweite Generalisierung mehr Zuordnungsbereiche als die erste Generalisierung umfassen. Dadurch können die anonymisierten Daten der Datenbank zu dem zweiten Zeitpunkt eine größere Aussagekraft haben und trotzdem noch die Anforderungen des Datenschutzes erfüllen. Zu noch späteren Zeitpunkten können weitere Schnappschüsse des Datensatzes erstellt werden und weitere Generalisierungen mit noch mehr Zuordnungsbereichen durchgeführt werden, wodurch die Verwendbarkeit der anonymisierten Daten in beispielsweise darauf aufbauenden Untersuchungen oder Studien weiter verbessert werden kann.

FIG. 2 zeigt beispielhaft zwei unterschiedliche Schnappschüsse einer Datenbank mit Generalisierungen eines Quasi-Identifikators mit realen konkreten Werten zwischen 0 und 12.

Zu einem ersten Zeitpunkt T1 sind beispielsweise 14 Datensätze vorhanden, welche jeweils durch einen Kreis in der Figur 2 dargestellt sind. Eine erste Generalisierung zum Zeitpunkt T1 enthält drei Zuordnungsbereiche, was in dem vorliegenden Beispiel drei Intervalle der Breite 4 sind, d.h. die Werte des Quasi-Identifikators werden auf die drei Intervalle [0,4[, [4,8[, [8,12[ generalisiert oder abstrahiert. Zu einem späteren Zeitpunkt T2 sind 18 Datensätze vorhanden. Eine zweite Generalisierung zum Zeitpunkt T2 enthält vier Zuordnungsbereiche, was in dem vorliegenden Beispiel vier Intervalle der Breite 3 sind, d.h. die vier Intervalle [0,3[, [3,6[, [6,9[, [9,12[. Jedes dieser Intervalle ist für sich genommen k-anonym, z.B. 4-anonym. Bei diesem Verfahren ist jedoch zu beachten, dass durch die Änderung der Generalisierung unerwartet sensible Informationen aufgedeckt werden können, wie das in FIG. 2 gezeigte Beispiel veranschaulicht.

Einem Beobachter, der Zugang zu beiden Schnappschüssen T1 und T2 hat, kann nämlich feststellen, dass zum Beispiel zum Zeitpunkt T1 einer der Datensätze (mit einem Pfeil markiert) im Intervall [0,4[ ist und zum Zeitpunkt T2 im zweiten Intervall [3,6[ ist. Dazu kann der Beobachter beispielsweise die Werte der sensiblen Attribute der Datensätze analysieren und erkennen, dass die beiden Datensätze demselben ursprünglichen Datensatz entsprechen, da die sensiblen Attribute für die beiden Datensätze in den anonymisierten Datenbanken identisch sind. Der Datensatz, der diese identischen sensiblen Attribute hat ist zu T1 in [0,4[ und später zu T2 in [3,6[. Wenn der Datensatz beispielsweise eine Person betrifft, kann der Beobachter daher für diese betroffene Person schließen, dass das verallgemeinerte Attribut (also der Wert des Quasi-Identifikators von diesem Datensatz) kleiner als 4, aber größer oder gleich als 3 ist. Er ist somit nicht durch die 4-Anonymität geschützt, wenn der Beobachter auf beide Schnappschüsse der Datenbank Zugriff hat.

Dies kann zum Beispiel dadurch vermieden werden, dass eine später angewendete Generalisierung feiner als eine vorher angewendete Generalisierung ist. Wenn beispielsweise eine Unterteilung zu einem bestimmten Zeitpunkt gewählt wird, z.B. in dem obigen Beispiel zum Zeitpunkt T1 das Intervall [0,4[, dann sollten später nur feinere Unterteilungen von [0,4[ gewählt werden, aber keine Unterteilungen, die sich über eine Intervallgrenze hinweg erstrecken. Mit anderen Worten, die Generalisierung sollte jedes Mal verfeinert werden.

Ein weiteres beispielhaftes Verfahren sieht daher vor, Schnappschüsse der Datenbank zu verschiedenen Zeiten zu anonymisieren, wobei jedoch jede neue Wahl der Generalisierung von Quasi-Identifikatoren jeweils feiner als die zuvor ist.

Dies gilt auch für Datenbanken, bei denen mehrere Quasi-Identifikatoren generalisiert werden, wie beispielsweise in der obigen Tabelle das Alter bzw. Geburtsdatum sowie die Postleitzahl. Die Generalisierung ist in diesen Fällen ein mehrdimensionales Problem, wobei die Dimension der Anzahl von Quasi-Identifikatoren entspricht.

Insbesondere bei mehrdimensionalen Problemen mit vielen Quasi-Identifikatoren kann es vorkommen, dass man sich zu einem ersten Zeitpunkt für eine Aufteilung der Zuordnungsbereiche, die ebenfalls mehrdimensional sein können, entscheidet, jedoch zu diesem Zeitpunkt noch nicht klar ist, welche Entscheidung langfristig geeignet oder optimal ist, insbesondere unter Berücksichtigung, dass nachfolgende Generalisierungen Verfeinerungen der vorhergehenden Generalisierungen darstellen sollten.

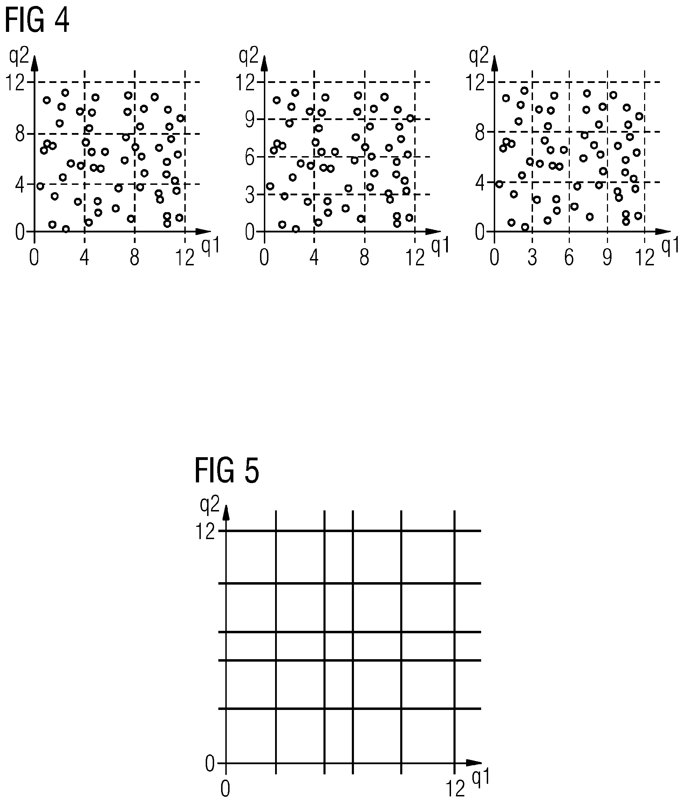

Zum Beispiel kann es zu einem ersten Zeitpunkt angesichts der in der Datenbank vorhandenen Datensätze sinnvoll sein, ein bestimmtes Attribut auf eine bestimmte Weise zu generalisieren, aber langfristig kann dies zu einer nicht optimalen Lösung führen. Dies wird nachfolgend anhand eines in FIG. 3 und FIG. 4 gezeigten Beispiels verdeutlicht.

Gegeben sind zwei Quasi-Identifikatoren q1 und q2, die jeweils reale Werte zwischen 0 und 12 haben. In FIG. 3 zeigt jeder Kreis die Werte von q1 und q2 für einen entsprechenden Datensatz an. Um eine gewünschte Anonymisierung, beispielsweise eine 4-Anonymität, zu erreichen, ist es möglich, die Werte auf Intervalle der Breite 3 (z.B. [0,3[, [3,6[, [6,9[, [9,12 [) oder der Breite 4 (z.B. [0,4[, [4,8[, [8,12[) zu verallgemeinern. FIG. 4 zeigt entsprechende Generalisierungen.

In dem Beispiel der FIG. 3 ist es jedoch zu dem Zeitpunkt, zu dem die in FIG. 3 gezeigten Datensätze vorhanden sind, nicht möglich, beide Quasi-Identifikatoren auf Intervalle der Länge 3 zu verallgemeinern. Mindestens einer der beiden Quasi-Identifikatoren muss auf Intervalle der Länge 4 verallgemeinert werden, um 4-Anonymität zu erhalten. Die drei Möglichkeiten sind, einschließlich der Option, dass beide auf Intervalle der Länge 4 verallgemeinert werden, in FIG. 4 gezeigt.

Die drei in FIG. 4 gezeigten Möglichkeiten, die Datensätze zu gruppieren, indem man die Werte der Quasi-Identifikatoren in Intervalle der Länge 3 oder 4 unterteilt, führt jedoch dazu, dass keine dieser Generalisierungen feiner als eine andere ist.

Wenn eine der drei Optionen zu einem ersten Zeitpunkt ausgewählt wird, kann es zu einem späteren zweiten Zeitpunkt schwierig sein, diese Intervalle durch verfeinern optimal aufzuteilen. Je nachdem, welche Werte für die weiteren Datensubjekte gelten, die zum zweiten Zeitpunkt zusätzlich verfügbar sind, kann im Nachhinein gesehen die eine oder die andere der Generalisierungen der FIG. 4 optimal sein. Da es jedoch keine Informationen über die zu erwartende Anzahl von Datensätzen, die noch erfasst werden, und deren Inhalte gibt, ist die Entscheidung für eine der drei Optionen zu dem ersten Zeitpunkt schwierig.

In vielen Fällen sind jedoch zusätzliche allgemeine Informationen über beispielsweise Verteilungen von Werten der Quasi-Identifikatoren verfügbar, welche bei der Generalisierung zu einem frühen Zeitpunkt, insbesondere bei einer ersten Generalisierung, berücksichtigt werden können. In klinischen Studien kann beispielsweise bekannt sein, dass junge Patienten dazu neigen, seltener an bestimmten klinischen Zuständen zu leiden als ältere, oder umgekehrt bei anderen klinischen Zuständen. Bei einer optimalen Einteilung werden daher die Intervalle in den Bereichen, in denen eine Krankheit seltener auftritt, größer gewählt als in den Bereichen, in denen die Krankheit häufiger auftritt. Dadurch können beispielsweise Intervalle einer ersten Generalisierung unterschiedliche Längen aufweisen. FIG. 5 zeigt eine entsprechende Generalisierung für zwei Quasi-Identifikatoren q1 und q2.

In der Mitte, wo beispielsweise mehr Datensätze vorhanden sind, sind die Intervalle und auch die zweidimensionalen Flächen kleiner, und an den Rändern sind sie größer. Idealerweise hat die Anzahl der Datensätze in jedem Rechteck die gleiche Anzahl von Elementen, wobei das Minimum dieser Anzahl als Wert k für die k-Anonymität verwendet werden kann.

Bei diesem beispielhaften Verfahren wird die Datenbank zu verschiedenen Zeitpunkten (Schnappschüsse) anonymisiert und jede neue Generalisierung ist feiner als die zuvor verwendete Generalisierung. Ferner werden die Zuordnungsbereiche, beispielsweise Intervalle oder Rechtecke, in Abhängigkeit der Dichte der Werte der Quasi-Identifikatoren unterschiedlich groß gewählt. Beispielsweise können Intervalle einer Generalisierung unterschiedliche Längen aufweisen.

Der Vorteil ist, dass mehr Informationen für sekundäre Zwecke zur Verfügung gestellt werden können, ohne die geforderte k-Anonymität zu verletzen und folgende Generalisierungen zu späteren Zeitpunkten optimaler gewählt werden können.

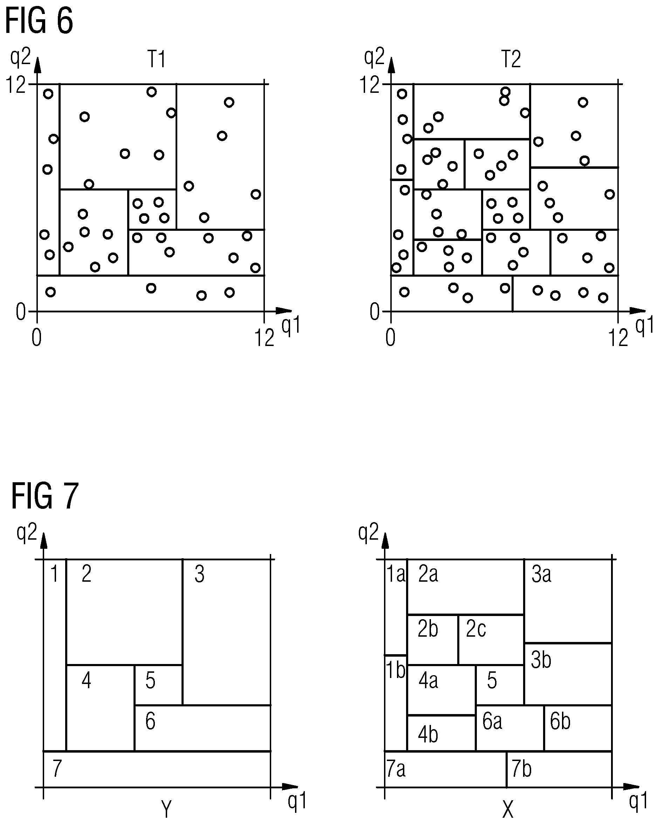

In dem obigen Beispiel der FIG. 3-5 wird jede Kombination von Quasi-Identifikatoren, z. B. Alter, Anzahl der Krankenhausbesuche und BMI, unabhängig voneinander abstrahiert. Das Alter wird in Intervalle (ggf. mit Intervallen unterschiedlicher Länge) unterteilt, die Anzahl der Krankenhausbesuche wird in Intervalle mit einer bestimmten Granularität unterteilt und der BMI wird ebenfalls in eine bestimmte Anzahl von Mengen unterteilt. Dabei wurde jedoch nicht berücksichtigt, dass diese Werte miteinander korrelieren können und daher einige Kombinationen viel häufiger vorkommen können als andere. So könnten zum Beispiel die in FIG. 5 gebildeten "langen und schmalen Rechtecke", die erzeugt werden, zumindest in einigen Bereichen nicht optimal sein, wie zum Beispiel in der FIG. 3 oben, wo in das mittlere schmale Rechteck oben in der Mitte keine Datensätze fallen. Eine Unterteilung, die berücksichtigt, dass einige Kombinationen häufiger vorkommen als andere, kann durch rechteckige Zuordnungsbereiche wie in der FIG. 6 dargestellt berücksichtigt werden.

In dieser FIG. 6 sind Zuordnungsbereiche von zwei Generalisierungen für eine Datenbank zu zwei Zeitpunkten T1 und T2 dargestellt. Zwei Quasi-Identifikatoren q1 und q2 werden anonymisiert. Eine geforderte Anonymisierung ist beispielsweise eine 4-Anonymität. Links ist ein Zustand zu dem ersten Zeitpunkt T1 gezeigt. Zum Zeitpunkt T2, welcher rechts gezeigt ist, sind mehr Datensätze verfügbar. Dementsprechend kann zum Zeitpunkt T2 eine feinere Generalisierung, also eine feinere Unterteilung in Rechtecke, gewählt werden. Wie aus der FIG. 6 ersichtlich ist, gilt auch hier, dass ein Zuordnungsbereich der Generalisierung zum Zeitpunkt T2 nur genau einem Zuordnungsbereich der Generalisierung zum Zeitpunkt T1 zugeordnet ist, d.h. jeder Zuordnungsbereich der Generalisierung zum Zeitpunkt T2 ist eine Teilmenge von nur einem Zuordnungsbereich der Generalisierung zum Zeitpunkt T1.

In diesem Beispiel können die Rechtecke an Verteilungen angepasst werden, die keine Produkte von Verteilungen der einzelnen Quasi-Identifikatoren sind. So ist es beispielsweise möglich, dass in der "rechten unteren Ecke" und in der "linken oberen Ecke" die Verteilung der Werte höher ist als in der "rechten oberen Ecke". Daher kann das Rechteck in der "rechten oberen Ecke" in beide Richtungen breiter sein, wie in der FIG. 6 dargestellt. Dies ist notwendig, wenn die Quasi-Identifikatoren nicht unabhängig voneinander sind.

Bei diesem Beispiel erfolgt die Anonymisierung der Datenbank somit mittels verschiedener "Schnappschüsse" über der Zeit. Dabei ist jede neue Wahl der Abstraktion feiner als die vorhergehende Abstraktion. Die Quasi-Identifikatoren werden nicht unabhängig voneinander in Intervalle oder Zuordnungsbereiche abstrahiert, sondern Kombinationen von ihnen werden in mehrdimensionalen Zuordnungsbereichen abstrahiert, im zweidimensionalen Fall beispielsweise in Form von den in FIG. 6 gezeigten Rechtecken.

Dadurch kann mehr Informationen für sekundäre Zwecke zur Verfügung gestellt werden, beispielsweise für klinische Studien, ohne die k-Anonymität zu beeinträchtigen.

Insbesondere in Situationen, in denen viele Dimensionen vorliegen, ist eine Optimierung auf lange Sicht, also über mehrere Zeitpunkte hinweg mit zunehmender Datenbankgröße, ziemlich schwierig zu erreichen, und es ist schwierig oder gar unmöglich vorherzusagen, welche Wahl der einzelnen Generalisierungsschritte zu optimalen Ergebnissen in der Zukunft führen wird. Andererseits bedingt die immer feiner werdende Generalisierung, dass bereits zum ersten Zeitpunkt bei der ersten Generalisierung eine erste Zuordnung gewählt werden muss, welche alle nachfolgenden Zuordnungen beeinflusst. Grenzen der ersten Zuordnung sollten nicht in späteren Zuordnungen verletzt werden, um die unter Bezug auf FIG. 2 beschriebene Problematik zu vermeiden.

Bei einem weiteren Beispiel zur Anonymisierung von Daten einer Datenbank werden daher statistische Daten aus einer oder mehreren zusätzlichen Quellen analysiert. Im Fall von medizinischen Daten könnten diese Quellen Daten von Krankenhäusern, einem öffentlichen klinischen Register, dem Robert-Koch-Institut, dem Statistischen Bundesamt, eine Vorverarbeitung der verfügbaren Ausgangsdaten usw. umfassen. Für Verkehrs- oder Mobilitätsdaten gibt es ähnliche Quellen. Bei medizinischen Daten ist die Inzidenz der Krankheit oder die klinische Diagnose über Patienten unterschiedlichen Alters und in Abhängigkeit von Körpergewicht, Geschlecht usw. ein wichtiger Ausgangspunkt. Für Mobilitätsdaten sind in ähnlicher Art und Weise Daten über die Nutzung bestimmter Verkehrswege - Autobahnen oder Züge - verfügbar. Unter Verwendung dieser statistischen Daten und einer erwarteten Anzahl von Datensätzen, die voraussichtlich während der gesamten Datenerfassungsdauer (oder über einen langen Zeitraum, wenn die Datenerfassung kein konkretes Ende hat) eintreffen werden, wird ein Abstraktionsziel festgelegt. Dieses Abstraktionsziel ist eine Aufteilung der Quasi-Identifikatoren in Zuordnungsbereiche unter Verwendung des Verfahrens der k-Anonymität. Werden mehrere Quasi-Identifikatoren der Anonymisierung unterzogen, so weisen die Zuordnungsbereiche eine entsprechende Dimension auf. Bei zwei Quasi-Identifikatoren sind die Zuordnungsbereiche beispielsweise Rechtecke, wie in FIG. 6 gezeigt. Diese statistische Analyse kann neben den (mehrdimensionalen) Zuordnungsbereichen (zum Beispiel Rechtecken) auch die relativen Größen der Zuordnungsbereiche angeben, die durch den Anteil der erwarteten Fälle in dem jeweiligen Zuordnungsbereich gegeben sind.

Da diese Quellen im Allgemeinen keine konkreten Datensätze bereitstellen, sondern nur eine erwartete Anzahl von Datensätzen, kann dieser Schritt mit synthetischen Daten (simulierten Daten) unter Verwendung der bekannten Verteilungen durchgeführt werden. Ein Abstraktionsziel ist eine Menge verhältnismäßig kleiner Zuordnungsbereiche (zum Beispiel Rechtecke im zweidimensionalen Fall), die wahrscheinlich erreicht werden und in einigen Fällen auch tatsächlich erreicht werden. In einigen Fällen können diese aber nur annähernd erreicht werden, weil einige Abweichungen notwendig sind, wie später erläutert wird. Die Zuordnungsbereiche können Produkte von Intervallen der Quasi-Identifikatoren sein, mit gleicher oder unterschiedlicher Breite wie in FIG. 5, oder Zuordnungsbereiche wie in FIG. 6. Die Zuordnungsbereiche sollten aber nicht zu klein sein, da die synthetischen Daten nur eine erste Annäherung an die erwarteten Daten sind und es voraussichtlich Abweichungen geben wird, wenn die realen Daten verwendet werden.

Das Abstraktionsziel ist also eine Abstraktion, die näherungsweise mit wachsender Größe der Datenbank erreicht werden soll und die erreicht werden kann, wenn die zukünftigen Daten die erwartete Verteilung aufweisen und die Abweichung der zukünftig erhaltenen Daten von den erwarteten Daten nicht zu groß ist.

Das Abstraktionsziel wird verwendet, um zu entscheiden, welcher Quasi-Identifikator (oder welche Kombination von Quasi-Identifikatoren) verfeinert werden soll. Insbesondere bei mehrdimensionalen Generalisierungen mit mehreren Quasi-Identifikatoren ist es möglich, bei einer Generalisierung eine Verfeinerung für entweder den einen Quasi-Identifikator oder für den anderen Quasi-Identifikator durchzuführen.

Ohne Abstraktionsziel ist allerdings zu dem Zeitpunkt, an dem die Entscheidung getroffen wird, ist unklar, welche Entscheidung langfristig optimal sein wird. Da nachfolgende Generalisierungen stets Verfeinerungen der vorhergehenden Generalisierungen darstellen, kann eine optimale Verteilung von Zuordnungsbereichen einer nachfolgenden Generalisierung je nachdem, wie die Werte für die nächsten Datensubjekte sind, schwierig sein, wenn bei einer vorhergehenden Generalisierung Grenzen der Zuordnungsbereiche ungünstig liegen. Anhand der statistischen Daten über die zu erwartende Anzahl und Verteilung von zukünftigen Datensätzen und das daraus gebildete Abstraktionsziel können Generalisierungen geeignet ausgestaltet werden, auch wenn die Datenbank erst wenige Datensätze enthält. Beispielsweise lässt sich anhand des Abstraktionsziels leicht erkennen, ob ein Intervall oder Rechteck oder mehrdimensionaler Zuordnungsbereich besser auf die eine oder andere Weise unterteilt werden sollte. Das Abstraktionsziel sollte feiner sein als die Generalisierung im nächsten Schritt.

Bei einem Beispiel wird also ein Abstraktionsziel erstellt, wie soeben erläutert, und dieses dann verwendet, um die richtige Auswahl aus verfügbaren Möglichkeiten bei Generalisierungen zu treffen.

Das Abstraktionsziel steuert die Auswahl wie folgt. Die beste Wahl ist diejenige, bei der das Abstraktionsziel feiner ist als die gewählte Generalisierung (oder irgendeine Generalisierung, die diese Bedingung erfüllt, wenn es mehrere gibt). Es gibt ein einfaches Kriterium, um festzustellen, ob eine Generalisierung X feiner ist als eine Generalisierung Y, wie in FIG. 7 dargestellt. Eine Generalisierung X ist dann und nur dann feiner als eine Generalisierung Y, wenn jeder Zuordnungsbereich (z.B. jedes Rechteck im zweidimensionalen Fall für zwei Quasi-Identifikatoren q1 und q2) der Generalisierung X in einem Zuordnungsbereich der Generalisierung Y enthalten ist. In der Fig. 7 ist $1a \subseteq 1$, $1b \subseteq 1$, $2a \subseteq 2$, $2b \subseteq 2$, $2c \subseteq 2$, $3a \subseteq 3$, $3b \subseteq 3$, $4a \subseteq 4$, $4b \subseteq 4$, $5 \subseteq 5$, $6a \subseteq 6$, $6b \subseteq 6$, $7a \subseteq 7$, $7b \subseteq 7$ (links von dem Teilmengensymbol ist jeweils der Bereich der Generalisierung X angegeben und rechts jeweils der Bereich der Generalisierung Y). Die Generalisierung X ist also feiner als die Generalisierung Y. Wenn die Generalisierung X feiner als die Generalisierung Y ist, dann gilt auch umgekehrt, dass die Generalisierung Y gröber als die Generalisierung X ist.

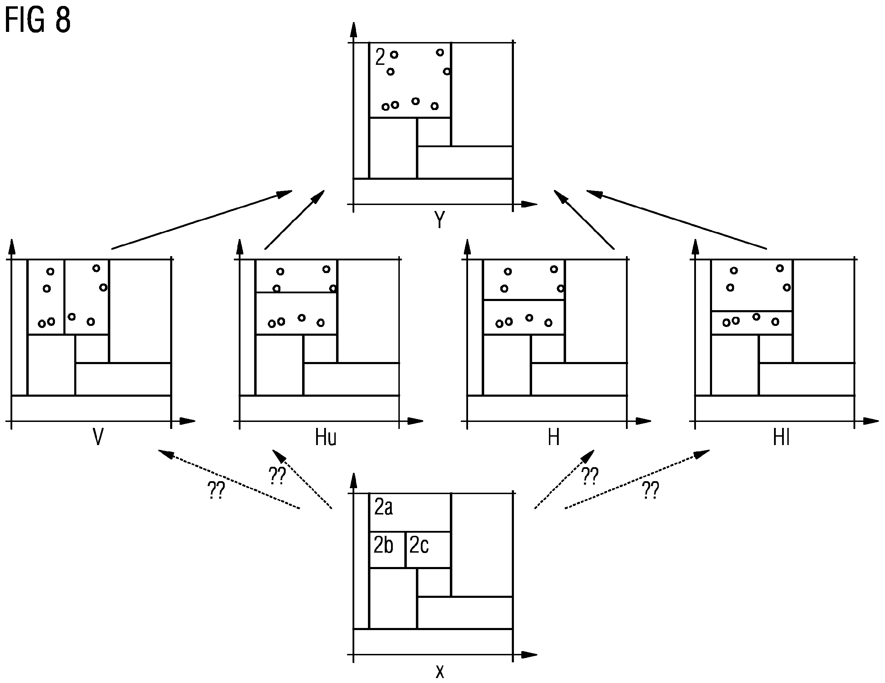

FIG. 8 zeigt ein Beispiel mit zwei Quasi-Identifikatoren. Ausgehend von einer Generalisierung Y ist der darin gezeigte Bereich 2 in einem weiteren Generalisierungsschritt zu unterteilen, um einem sekundären Zweck genauere, aber dennoch anonymisierte Daten bereitstellen zu können. Gefordert ist beispielsweise eine 4-Anonymität. Dem Bereich 2 fallen acht Datensätze, welche jeweils durch einen Kreis in der Generalisierung Y dargestellt sind. Um eine 4-Anonymität aufrechtzuerhalten kann der Bereich auf verschiedene Arten weiter unterteilt werden, beispielsweise durch eine vertikale Teilung, wie in der Generalisierung V gezeigt, oder durch eine horizontale Teilung in verschiedenen Höhen, wie es in den Generalisierungen Hu, H und Hl in FIG. 8 dargestellt ist. Da, wie zuvor erörtert, nachfolgende Generalisierungen stets feiner gewählt werden sollten als eine aktuelle Generalisierung, stellt jede der Generalisierungen V, Hu, H und Hl Einschränkungen für eine nachfolgende Generalisierung dar. Zu dem Zeitpunkt, zu dem eine der Generalisierungen V, Hu, H und H auszuwählen ist, ist häufig noch nicht klar, welche für nachfolgende Generalisierungen günstiger oder ungünstiger ist. Durch Berücksichtigung einer zu erwartenden Verteilung von Datensätzen aus statistischen Daten aus anderen Quellen kann eine voraussichtlich günstige Generalisierung ausgewählt werden. In dem Beispiel der FIG. 8 ist aus anderen Quellen, beispielsweise bei medizinischen Studien aus Quellen des Robert-Koch-Instituts, eine typische statistische Verteilung von Datensätzen der betreffenden Quasi-Identifikatoren bekannt, woraus eine Ziel-Generalisierung X abgeleitet werden kann, welche den Bereich 2 in die in FIG. 8 gezeigten Zuordnungsbereiche 2a, 2b und 2c unterteilt, um eine 4-Anonymität zu erreichen. Aus FIG. 8 ist ersichtlich, dass lediglich über die Generalisierung H eine Verfeinerung in Richtung der Ziel-Generalisierung X möglich ist. Daher sollte die Generalisierung H im nächsten Schritt gewählt werden.

Wenn keine der verfügbaren möglichen Generalisierungen die Eigenschaft hat, dass die entsprechende Ziel-Generalisierung feiner als mögliche Generalisierung ist, kann entweder gewartet werden, bis mehr Daten in die Datenbank aufgenommen wurden, oder die Generalisierung gewählt werden, die dem Abstraktionsziel am nächsten kommt, je nachdem, wie viel Abweichung vom Abstraktionsziel tolerieren werden kann. Diese Abweichung vom Abstraktionsziel kann ein fest vorgegebener Wert sein oder ein Parameter des Verfahrens sein, welcher beispielsweise in Abhängigkeit davon eingestellt werden kann, wie viele Datensätze zu erwarten sind.

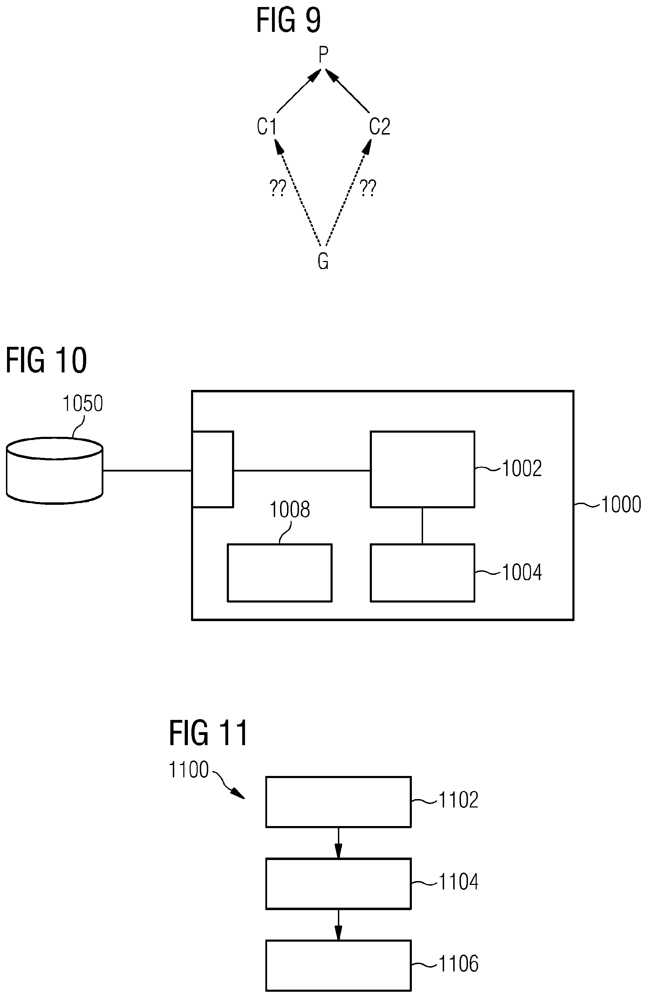

Wenn beispielsweise, wie in FIG. 9 gezeigt, bei einer aktuellen Abstraktion Y, einem Abstraktionsziel G und mehreren Abstraktionen C1, C2, die Y verfeinern, keine der mehreren Abstraktionen C1, C2 gröber als G ist, besteht das Verfahren darin, die Abstraktion so zu wählen, dass die Abweichung vom Ziel G minimal ist. In dem Beispiel in FIG. 9 sind lediglich zwei mögliche Abstraktionen C1, C2 gezeigt. Das Verfahren lässt sich jedoch leicht auf eine beliebige Anzahl von möglichen Abstraktionen C1, C2, ...Cn erweitern.

Wenn das Abstraktionsziel G nicht feiner als eine Abstraktion C der möglichen Abstraktionen ist, kann die Abweichung der Abstraktion C von dem Abstraktionsziel G folgendermaßen bestimmt werden. Zunächst wird die Abweichung jedes Zuordnungsbereichs (z.B. jedes Rechtecks) aus C von G wie folgt definiert.

Für jeden Zuordnungsbereich $R_G$, der in G definiert ist, werden diejenigen Zuordnungsbereiche $R_C$, die in C definiert sind, betrachtet, die den Zuordnungsbereich $R_G$ schneiden. Wenn nur ein Zuordnungsbereich $R_C$ den Zuordnungsbereich $R_G$ schneidet, dann ist $R_G$ in $R_C$ enthalten, und die Abweichung von $R_G$ wird als Null definiert. Wenn mehrere Zuordnungsbereiche $R_C$ den Zuordnungsbereich $R_G$ schneiden, werden die Größen dieser Überschneidungen betrachtet und der Zuordnungsbereich $R_C$ ausgewählt, der die größte Überschneidung mit $R_G$ hat. Die Abweichung des Zuordnungsbereichs $R_G$ ist die Summe der Größen dieser Überschneidungen mit Ausnahme der größten Überschneidung. Mit anderen Worten ist die Abweichung des Zuordnungsbereichs $R_G$ die kleinste Summe aller Überschneidungen außer einer, nämlich der größten Überschneidung.

Die Abweichung für C von G ist die Summe aller Abweichungen aller Zuordnungsbereiche in C von G. Also: C ist gröber als G (G ist feiner als C) genau dann, wenn die Abweichung für C von G Null ist.

In einem weiteren Beispiel werden folgende Überlegungen berücksichtigt. Üblicherweise sind die Intervallmengen für einen Quasi-Identifikator eine Partition der interessierenden Wertemenge. Wie beispielsweise zuvor in Verbindung mit Fig. 1 beschrieben wurde, sind P1, P2, P3 jeweils Partitionen des Intervalls [40,100[, also der Werte, die für das Alter von Interesse sind. Eine Partition einer Menge A ist eine Menge von Teilmengen, die untereinander disjunkt sind und die Menge A abdecken (oder ausschöpfen). In einigen Fällen ist es jedoch möglich, Intervallmengen zu verwenden, die keine Partition darstellen.

Beispielsweise können disjunkte Mengen verwendet werden, die nicht alle möglichen Werte abdecken. So kann beispielsweise eine bestimmte Krankheit entweder bei jungen Menschen (z. B. 16-22 Jahre) oder bei älteren Menschen (über 50, aber nicht über 80) auftreten. Anstatt eine Partition von [16,80[ zu wählen, kann eine Menge von interessanten Altersgruppen gewählt werden, zum Beispiel:

P4 ={ [16, 18[, [18, 20[, [20, 22[, [50, 55[, 55, 60[, [60, 65[, [65, 70[, [70, 75[, [75, 80[ }.

Jeder Datensatz, dessen entsprechender Quasi-Identifikator einen Wert außerhalb dieser Intervalle enthält, wird eliminiert (unterdrückt). Dies kann insbesondere dann sinnvoll sein, wenn der Anteil der unterdrückten Datensätze nicht zu hoch ist oder sich das Attribut nicht auf einen wichtigen Wert im Sinne der sekundären Zwecke handelt.

Zusammenfassend wird die k-Anonymität wird für einen Satz von Datensätzen verfeinert (d. h. für eine Datenbank, wie oben beschrieben). In vielen Situationen stehen die Datensätze jedoch nicht von Anfang an zur Verfügung, sondern es kommen im Laufe der Zeit weitere hinzu. Da es von großem praktischen Nutzen ist, wenn die Werte in anonymisierter Form bereits verwenden können, auch wenn noch nicht alle Werte verfügbar sind, sieht das zuvor beschrieben Verfahren vor, mit zunehmender Datenmenge Abstraktionen von Quasi-Identifikatoren schrittweise zu verfeinern, so dass die k-Anonymität erhalten bleibt und die Daten im Laufe der Zeit in einer präziseren Form anonymisiert freigegeben werden, wodurch ihre Verwendbarkeit erhöht wird, die Privatsphäre aber dauerhaft erhalten bleibt.

Bei der Verfeinerung kann ein Abstraktionsziel berücksichtigt werden, welches auf einer statistischen Analyse von erwarteten Werten der Quasi-Identifikatoren aus anderen Datenquellen beruht. Schrittweise Verfeinerungen können dem Abstraktionsziel angenähert werden, wobei immer eine k-Anonymisierung gewählt wird, die möglichst wenig von dem Abstraktionsziel abweicht.

Die zuvor beschriebenen Verfahren können automatisiert von einer Vorrichtung, beispielsweise einem Computersystem, ausgeführt werden. Fig. 10 veranschaulicht Aspekte in Bezug auf eine entsprechende Vorrichtung 1000 zum Anonymisieren von Daten mittels Generalisierung. Die Vorrichtung 1000 umfasst eine Verarbeitungsvorrichtung 1002, z. B. einen Prozessor, und einen Speicher 1004. Die Vorrichtung 1000 umfasst auch eine Schnittstelle 1006. Über die Schnittstelle 1006 kann die Vorrichtung 1000 Zugriff auf eine Datenbank 1050 haben, in welcher zu anonymisierende Daten gespeichert sind und anonymisierte Daten gespeichert werden können. Die Vorrichtung 1000 kann ferner ein computerlesbares Speichermedium 1008 umfassen, beispielsweise eine Festplatte, einen Schreib-Lese-Speicher oder einen nur-Lese-Speicher, in dem ein Computerprogrammprodukt, beispielsweise eine Software, gespeichert ist, das einen computerlesbaren Programmcode umfasst, der ausgestaltet ist, die Verarbeitungsvorrichtung 1002 zu veranlassen, die nachfolgend beschriebenen Verarbeitungsschritte auszuführen.

Zu einem ersten Zeitpunkt umfassen die zu anonymisierenden Daten eine erste Anzahl von ersten Datensätzen und zu einem zweiten späteren Zeitpunkt eine zweite Anzahl von zweiten Datensätzen. Die ersten Datensätze sind eine Teilmenge der zweiten Datensätze.

In Verbindung mit Fig. 11 werden nachfolgend Verarbeitungsschritte eines Verfahrens 1100 beschrieben, welche von der Vorrichtung 1000, insbesondere von der Bearbeitungsvorrichtung 1002, durchgeführt werden.

Die Verarbeitungsvorrichtung 1002 ist ausgestaltet, eine erste Generalisierung für die ersten Datensätze zu erzeugen, die eine geforderte Anonymisierung erfüllt (Schritt 1102). Die erste Generalisierung umfasst eine erste Gruppe von Zuordnungsbereichen, mit denen Werte eines Quasi-Identifikators der Daten generalisiert werden. Die Verarbeitungsvorrichtung 1002 ist ferner ausgestaltet, eine zweite Generalisierung für die zweiten Datensätze zu erzeugen (Schritt 1104), die die geforderte Anonymisierung erfüllt. Die zweite Generalisierung umfasst eine zweite Gruppe von Zuordnungsbereichen, mit denen Werte des Quasi-Identifikators generalisiert werden. Die zweite Gruppe umfasst mehr Zuordnungsbereiche als die erste Gruppe. Weitere Generalisierungen können zu weiteren Zeitpunkten durchgeführt werden, wenn weitere Datensätze zur Verfügung stehen. Die so generalisierten Datensätze können in der Datenbank 1050 als anonymisierte Datensätze abgelegt werden oder auf andere Art und Weise für sekundäre Zwecke an eine weitere Datenbank übermittelt werden (Schritt 1106).

Wie zuvor beschrieben, können die Daten beispielsweise Patientendaten umfassen. Zum Beispiel kann ein Leistungserbringer (z. B. eine Klinik) personenbezogene Daten von Patienten erfassen, um die Patienten zu behandeln. Diese Daten können persönliche Daten, wie Name, Alter, Adresse und dergleichen, sowie Gesundheitsdaten, wie Art der Erkrankung, Blutwerte, Röntgenbilder etc., umfassen. Der Leistungserbringer kann die Daten dann für sekundäre Zwecke, zum Beispiel zur Förderung der klinischen Forschung in anonymisierter Form verwenden, zum Beispiel für klinische Studien oder um ein Diagnosesystem, welches auf künstlicher Intelligenz oder maschinellem Lernen basiert, mit den anonymisierten Daten trainieren. In einem anderen Beispiel kann der Leistungserbringer im Verkehrsbereich Daten sammeln, um beispielsweise Parkgebühren, Straßennutzungsgebühren oder Beförderungsentgelte abzurechnen. Diese Daten können wiederum persönliche Daten, wie Name, Adresse, Marke und Typ des Fahrzeugs, zurückgelegte Strecken und Uhrzeiten von Fahrten umfassen. In anonymisierter Form können diese Daten für die Verkehrsplanung oder Verkehrsleitung als sekundäre Zwecke verwendet werden. Ein weiteres Beispiel betrifft die elektronische Erfassung von Daten in Gebäuden, wie zum Beispiel in Aufzügen oder an Türen. Für eine Zugangskontrolle können diese Daten persönliche Daten, wie Name, Firmenzugehörigkeit, ein Bild des Gesichts sowie typische Bewegungsmuster der Person, z.B. Bewegungspfade und zugehörigen Zeiten, umfassen. In anonymisierter Form können diese Daten beispielsweise für eine Optimierung einer Aufzugssteuerung oder für Planungen von Verkehrswegen in Gebäuden verwendet werden.

## Patentansprüche

1. Computer-implementiertes Verfahren zum Anonymisieren von Daten mittels Generalisierung, wobei die Daten zu einem ersten Zeitpunkt eine erste Anzahl von ersten Datensätzen umfassen und zu einem zweiten Zeitpunkt eine zweite Anzahl von zweiten Datensätzen umfassen, wobei die ersten Datensätze eine Teilmenge der zweiten Datensätze sind, wobei das Verfahren umfasst:

   - Erzeugen (1102) einer ersten Generalisierung für die ersten Datensätze, die eine geforderte Anonymisierung erfüllt, wobei die erste Generalisierung eine erste Gruppe von Zuordnungsbereichen umfasst, mit denen Werte eines Quasi-Identifikators der Daten generalisiert werden, und
   - Erzeugen (1104) einer zweiten Generalisierung für die zweiten Datensätze, die die geforderte Anonymisierung erfüllt, wobei die zweite Generalisierung eine zweite Gruppe von Zuordnungsbereichen umfasst, mit denen Werte des Quasi-Identifikators generalisiert werden,
   wobei die zweite Gruppe mehr Zuordnungsbereiche als die erste Gruppe umfasst, **gekennzeichnet durch**
   - Bestimmen einer statistischen Verteilung von Werten des Quasi-Identifikators,
   - Erzeugen einer Ziel-Generalisierung auf der Grundlage der statistischen Verteilung, wobei die Ziel-Generalisierung eine Ziel-Gruppe von Zuordnungsbereichen umfasst, mit denen Werte eines Quasi-Identifikators der Daten generalisiert werden,
   - Erzeugen der ersten Generalisierung und/oder der zweiten Generalisierung zusätzlich in Abhängigkeit von der Ziel-Generalisierung, sodass die Ziel-Generalisierung beim Erzeugen der Gruppe der ersten oder der zweiten Zuordnungsbereiche berücksichtigt wird, um zu vermeiden, dass Grenzen zwischen Zuordnungsbereichen eingerichtet werden, welche für die zweite oder eine dritte Gruppe von Zuordnungsbereichen zumindest teilweise ungeeignet sind,

wobei zur Verfeinerung ein Abstraktionsziel berücksichtigt wird, welches auf statistischen Daten aus einer statistischen Analyse von erwarteten Werten der Quasi-Identifikatoren aus anderen Datenquellen beruht, wobei das Abstraktionsziel unter Verwendung der statistischen Daten und einer erwarteten Anzahl von Datensätzen, die voraussichtlich während einer gesamten Datenerfassungsdauer eintreffen werden, festgelegt wird, wobei das Abstraktionsziel eine Aufteilung der Quasi-Identifikatoren in Zuordnungsbereiche unter Verwendung des Verfahrens der k-Anonymität ist.

2. Computer-implementiertes Verfahren nach Anspruch 1,

wobei beim Erzeugen der Zuordnungsbereiche der ersten Gruppe für jeden Wert des Quasi-Identifikators gilt, dass der Wert höchstens einem der Zuordnungsbereiche der ersten Gruppe zugeordnet ist, wobei die den Zuordnungsbereichen der ersten Gruppe zugeordneten Werte die Quasi-Identifikatoren der ersten Datensätze sind, und
wobei beim Erzeugen der Zuordnungsbereiche der zweiten Gruppe für jeden Wert des Quasi-Identifikators gilt, dass der Wert höchstens einem der Zuordnungsbereiche der zweiten Gruppe zugeordnet ist, wobei die den Zuordnungsbereichen der zweiten Gruppe zugeordneten Werte die Quasi-Identifikatoren der zweiten Datensätze sind.

3. Computer-implementiertes Verfahren nach Anspruch 1 oder Anspruch 2, wobei eine Wertemenge, welche der Gesamtheit der Zuordnungsbereiche der ersten Gruppe zugeordnet ist, gleich einer Wertemenge ist, welche der Gesamtheit der Zuordnungsbereiche der zweiten Gruppe zugeordnet ist.

4. Computer-implementiertes Verfahren nach einem der vorhergehenden Ansprüche, wobei für jeden Zuordnungsbereich der zweiten Gruppe gilt, dass eine Wertemenge des jeweiligen Zuordnungsbereichs eine Teilmenge von einer Wertemenge von genau einem Zuordnungsbereich der ersten Gruppe ist.

5. Computer-implementiertes Verfahren nach einem der vorhergehenden Ansprüche, wobei einem jeweiligen Zuordnungsbereich der ersten Gruppe ein jeweiliges Intervall zugeordnet ist, wobei die Intervalle der ersten Gruppe voneinander unabhängige Intervalllängen aufweisen, wobei eine jeweilige Intervalllänge eines jeweiligen Intervalls der ersten Gruppe von einer Anzahl von Datensätzen der ersten Datensätze, die diesem Intervall zugeordnet sind, abhängt.

6. Computer-implementiertes Verfahren nach einem der vorhergehenden Ansprüche, wobei die Daten zu einem weiteren Zeitpunkt eine weitere Anzahl von weiteren Datensätzen umfassen, wobei die weiteren Datensätze eine Obermenge von vorhergehenden Datensätzen zu einem vorhergehenden Zeitpunkt sind, wobei das Verfahren ferner umfasst:

Erzeugen einer weiteren Generalisierung für die weiteren Datensätze auf der Grundlage einer vorhergehenden Generalisierung, wobei die weitere Generalisierung zur Generalisierung des Quasi-Identifikators eine weitere Gruppe von Zuordnungsbereichen für den Quasi-Identifikator umfasst, wobei die weitere Gruppe mehr Zuordnungsbereiche als eine vorhergehende Gruppe von Zuordnungsbereichen der vorhergehenden Generalisierung umfasst,
wobei die vorhergehende Generalisierung die zweite Generalisierung oder eine auf der zweiten Generalisierung iterativ basierende weitere Generalisierung ist.

7. Computer-implementiertes Verfahren nach einem der vorhergehenden Ansprüche,

wobei jeder Zuordnungsbereich der ersten Gruppe einen mindestens zweidimensionalen Zuordnungsbereich umfasst, mit dem Werte des Quasi-Identifikators und Werte von mindestens einem weiteren Quasi-Identifikator der Daten generalisiert werden,
und
wobei jeder Zuordnungsbereich der zweiten Gruppe einen mindestens zweidimensionalen Zuordnungsbereich umfasst, mit dem Werte des Quasi-Identifikators und Werte von mindestens einem weiteren Quasi-Identifikator der Daten generalisiert werden.

8. Computer-implementiertes Verfahren nach Anspruch 7, ferner umfassend:

- Bestimmen statistischer Verteilungen von Werten des Quasi-Identifikators und von Werten des mindestens einen weiteren Quasi-Identifikators,
- Erzeugen einer Ziel-Generalisierung auf der Grundlage der statistischen Verteilungen, wobei die Ziel-Generalisierung eine Gruppe von mindestens zweidimensionalen Zuordnungsbereichen umfasst, mit denen Werte des Quasi-Identifikators und des mindestens einen weiteren Quasi-Identifikators generalisiert werden,
- Erzeugen der ersten Generalisierung und/oder der zweiten Generalisierung zusätzlich in Abhängigkeit von der Ziel-Generalisierung.

9. Vorrichtung zum Anonymisieren von Daten mittels Generalisierung, wobei die Daten zu einem ersten Zeitpunkt eine erste Anzahl von ersten Datensätzen umfassen und zu einem zweiten (späteren) Zeitpunkt eine zweite Anzahl von zweiten Datensätzen umfassen, wobei die ersten Datensätze eine Teilmenge der zweiten Datensätze sind, wobei die Vorrichtung (1000) eine Verarbeitungsvorrichtung (1002) umfasst, welche ausgestaltet ist, die Schritte des Verfahrens nach Anspruch 1 auszuführen.

10. Vorrichtung nach Anspruch 9, wobei die Vorrichtung (1000) zur Durchführung des Verfahrens nach einem der Ansprüche 2-8 ausgestaltet ist.

11. Computerprogrammprodukt umfassend einen computerlesbaren Programmcode, der ausgestaltet ist, eine Verarbeitungsvorrichtung (1000) zu veranlassen, die Schritte des Verfahrens nach einem der Ansprüche 1-8 auszuführen.

12. Computerlesbares Speichermedium, das ausgestaltet ist, darin ein Computerprogrammprodukt zu speichern, das einen computerlesbaren Programmcode umfasst, der ausgestaltet ist, eine Verarbeitungsvorrichtung (1002) zu veranlassen, die Schritte des Verfahrens nach einem der Ansprüche 1-8 auszuführen.

## Claims

1. Computer-implemented method for anonymising data by means of generalisation, wherein the data comprises a first number of first datasets at a first time point and a second number of second datasets at a second time point, wherein the first datasets are a subset of the second datasets, wherein the method comprises:

    - generating (1102) a first generalisation for the first datasets that fulfils a required anonymisation, wherein the first generalisation comprises a first group of assignment ranges by means of which values of a quasi-identifier of the data are generalised, and
    - generating (1104) a second generalisation for the second datasets that fulfils the required anonymisation, wherein the second generalisation comprises a second group of assignment ranges by means of which values of the quasi-identifier are generalised,
    wherein the second group comprises more assignment ranges than the first group, **characterised by**
    - determining a statistical distribution of values of the quasi-identifier,
    - generating a target generalisation on the basis of the statistical distribution, wherein the target generalisation comprises a target group of assignment ranges by means of which values of a quasi-identifier of the data are generalised,
    - generating the first generalisation and/or the second generalisation additionally as a function of the target generalisation, so that the target generalisation is taken into account when generating the group of the first or the second assignment ranges, in order to avoid that boundaries between assignment ranges are set up which are at least to some extent unsuitable for the second or a third group of assignment ranges,

    wherein for refinement an abstraction target is taken into account, which is based on statistical data from a statistical analysis of expected values of the quasi-identifiers from other data sources, wherein the abstraction target is specified using the statistical data and an expected number of datasets that will likely arrive during an entire data acquisition period, wherein the abstraction target is a subdivision of the quasi-identifiers into assignment ranges using the k-anonymity method.

2. Computer-implemented method according to claim 1,

    wherein, when generating the assignment ranges of the first group, for each value of the quasi-identifier it applies that the value is assigned at most to one of the assignment ranges of the first group, wherein the values assigned to the assignment ranges of the first group are the quasi-identifiers of the first datasets, and

wherein, when generating the assignment ranges of the second group, for each value of the quasi-identifier it applies that the value is assigned at most to one of the assignment ranges of the second group, wherein the values assigned to the assignment ranges of the second group are the quasi-identifiers of the second datasets.

3. Computer-implemented method according to claim 1 or claim 2, wherein a value set which is assigned to the totality of assignment ranges of the first group is identical to a value set which is assigned to the totality of assignment ranges of the second group.

4. Computer-implemented method according to one of the preceding claims, wherein for each assignment range of the second group it applies that a value set of the respective assignment range is a subset of a value set of precisely one assignment range of the first group.

5. Computer-implemented method according to one of the preceding claims, wherein a respective interval is assigned to a respective assignment range of the first group, wherein the intervals of the first group have interval lengths independent of one another, wherein a respective interval length of a respective interval of the first group is dependent on a number of datasets of the first datasets that are assigned to said interval.

6. Computer-implemented method according to one of the preceding claims, wherein the data at a further time point comprises a further number of further datasets, wherein the further datasets are a superset of preceding datasets at a preceding time point, wherein the method further comprises:

generating a further generalisation for the further datasets on the basis of a preceding generalisation, wherein the further generalisation for generalising the quasi-identifier comprises a further group of assignment ranges for the quasi-identifier, wherein the further group comprises more assignment ranges than a preceding group of assignment ranges of the preceding generalisation,

wherein the preceding generalisation is the second generalisation or a further generalisation iteratively based on the second generalisation.

7. Computer-implemented method according to one of the preceding claims,

wherein each assignment range of the first group comprises an at least two-dimensional assignment range by means of which values of the quasi-identifier and values of at least one further quasi-identifier of the data are generalised, and wherein each assignment range of the second group comprises an at least two-dimensional assignment range by means of which values of the quasi-identifier and values of at least one further quasi-identifier of the data are generalised.

8. Computer-implemented method according to claim 7, further comprising:

- determining statistical distributions of values of the quasi-identifier and of values of the at least one further quasi-identifier,

- generating a target generalisation on the basis of the statistical distributions, wherein the target generalisation comprises a group of at least two-dimensional assignment ranges by means of which values of the quasi-identifier and of the at least one further quasi-identifier are generalised,

- generating the first generalisation and/or the second generalisation additionally as a function of the target generalisation.

9. Device for anonymising data by means of generalisation, wherein the data comprises a first number of first datasets at a first time point and a second number of second datasets at a second (later) time point, wherein the first datasets are a subset of the second datasets, wherein the device (1000) comprises a processing device (1002) which is embodied to perform the steps of the method according to claim 1.

10. Device according to claim 9, wherein the device (1000) is embodied to perform the method according to one of claims 2-8.

11. Computer program product comprising a computer-readable program code which is embodied to cause a processing device (1000) to perform the steps of the method according to one of claims 1-8.

12. Computer-readable storage medium which is embodied to store therein a computer program product comprising a computer-readable program code which is embodied to cause a processing device (1002) to perform the steps of the method according to one of claims 1-8.

**Revendications**

1. Procédé mis en œuvre par ordinateur d'anonymisation de données au moyen d'une généralisation, dans lequel les données comprennent, à un premier instant, un premier nombre de premiers ensembles de données et, à un deuxième instant, un deuxième nombre de deuxième ensemble de données, dans lequel les premiers ensembles de données sont un sous-ensemble des deuxièmes ensembles de données, dans lequel le procédé comprend :

   - production (1102) d'une première généralisation pour les premiers ensembles de données, qui satisfont une anonymisation exigée, dans lequel la première généralisation comprend un premier groupe de parties d'affectation, par lesquelles des valeurs d'un quasi-identificateur des données sont généralisées, et
   - production (1104) d'une deuxième généralisation pour les deuxièmes ensembles de données, qui satisfont l'anonymisation exigée, dans lequel la deuxième généralisation comprend un deuxième groupe de parties d'affectation, par lesquelles des valeurs du quasi-identificateur sont généralisées,
   dans lequel le deuxième groupe comprend plus de parties d'affectation que le premier groupe, **caractérisé par**
   - détermination d'une distribution statistique de valeurs du quasi-identificateur,
   - production d'une généralisation-cible sur la base de la distribution statistique, dans lequel la généralisation-cible comprend un groupe-cible de parties d'affectation, par lesquelles des valeurs d'un quasi-identificateur des données sont généralisées,
   - production de la première généralisation et/ou de la deuxième généralisation supplémentairement en fonction de la généralisation-cible, de sorte que la généralisation-cible est prise en compte, lors de la production du groupe des premières ou des deuxièmes parties d'affectation, afin d'éviter d'établir entre des parties d'affectation des limites, qui sont au moins en partie inappropriées pour le deuxième ou un troisième groupe de parties d'affectation,

   dans lequel on prend en compte pour le raffinement une cible d'abstraction, qui repose sur des données statistiques d'une analyse statistique de valeurs escomptées des quasi-identificateurs d'autres sources de données, dans lequel on détermine la cible d'abstraction en utilisant les données statistiques et un nombre escompté d'ensembles de données, qui se produisent probablement pendant toute une durée de saisie de données, dans lequel la cible d'abstraction est une distribution des quasi-identificateurs en parties d'affectation en utilisant le procédé de l'anonymie K.

2. Procédé mis en œuvre par ordinateur suivant la revendication 1, dans lequel, lors de la production des parties d'affectation du premier groupe pour chaque valeur du quasi-identificateur, la valeur est affectée au plus à l'une des parties d'affectation du premier groupe, dans lequel les valeurs affectées aux parties d'affectation du premier groupe sont les quasi-identificateurs du premier ensemble de données, et
   dans lequel, lors de la production des parties d'affectation du deuxième groupe pour chaque valeur du quasi-identificateur, la valeur est affectée au plus à l'une des parties d'affectation du deuxième groupe, dans lequel les valeurs affectées aux parties d'affectation du deuxième groupe sont les quasi-identificateurs des deuxièmes ensembles de données.

3. Procédé mis en œuvre par ordinateur suivant la revendication 1 ou 2, dans lequel un ensemble de valuation, qui est affecté à l'ensemble des parties d'affectation du premier groupe, est égal à un ensemble de valuation, qui est affecté à l'ensemble des parties d'affectation du deuxième groupe.

4. Procédé mis en œuvre par ordinateur suivant l'une des revendications précédentes, dans lequel pour chaque partie d'affectation du deuxième groupe, un ensemble de valuation de la partie d'affectation respective est un sous-ensemble d'un ensemble de valuation d'exactement une partie d'affectation du premier groupe.

5. Procédé mis en œuvre par ordinateur suivant l'une des revendications précédentes, dans lequel, à une partie d'affectation respective du premier groupe est affecté un intervalle respectif, dans lequel les intervalles du premier groupe ont des longueurs d'intervalle indépendantes les unes des autres, dans lequel une longueur d'intervalle respective d'un intervalle respectif du premier groupe dépend d'un nombre d'ensembles de données des premiers ensembles de données, qui sont affectés à cet intervalle.

**6.** Procédé mis en œuvre par ordinateur suivant l'une des revendications précédentes, dans lequel les données comprennent, à un autre instant, un autre nombre d'autres ensembles de données, dans lequel les autres ensembles de données sont un sur-ensemble d'ensembles de données précédents à un instant précédent, dans lequel le procédé comprend en outre :

production d'une autre généralisation pour les autres ensembles de données sur la base d'une généralisation précédente, dans lequel l'autre généralisation comprend, pour la généralisation du quasi-identificateur, un autre groupe de parties d'affectation pour le quasi-identificateur, dans lequel l'autre groupe comprend plus de parties d'affectation qu'un groupe précédent de parties d'affectation de la généralisation précédente, dans lequel la généralisation précédente est la deuxième généralisation ou une autre généralisation fondée itérativement sur la deuxième généralisation.

**7.** Procédé mis en œuvre par ordinateur suivant l'une des revendications précédentes,

dans lequel chaque partie d'affectation du premier groupe comprend une partie d'affectation au moins en deux dimensions, par laquelle des valeurs du quasi-identificateur et des valeurs d'au moins un autre quasi-identificateur des données sont généralisées, et
dans lequel chaque partie d'affectation du deuxième groupe comprend une partie d'affectation au moins en deux dimensions, par laquelle des valeurs du quasi-identificateur et des valeurs d'au moins un autre quasi-identificateur des données sont généralisées.

**8.** Procédé mis en œuvre par ordinateur suivant la revendication 7, comprenant en outre :

- détermination de distributions statistiques de valeurs du quasi-identificateur et de valeurs du au moins un autre quasi-identificateur,
- production d'une généralisation-cible sur la base des distributions statistiques, dans lequel la généralisation-cible comprend un groupe de parties d'affectation au moins en deux dimensions, par lesquelles des valeurs du quasi-identificateur du au moins un autre quasi-identificateur sont généralisées,
- production de la première généralisation et/ou de la deuxième généralisation supplémentairement en fonction de la généralisation-cible.

**9.** Dispositif d'anonymisation de données au moyen d'une généralisation, dans lequel les données comprennent, à un premier instant, un premier nombre de premiers ensembles de données et, à un deuxième instant (ultérieur), un deuxième nombre de deuxièmes ensembles de données, dans lequel les premiers ensembles de données sont un sous-ensemble des deuxièmes ensembles de données, dans lequel le dispositif (1000) comprend un dispositif (1002) de traitement, qui est conformé, pour exécuter les stades du procédé suivant la revendication 1.

**10.** Dispositif suivant la revendication 9, dans lequel le dispositif (1000) est conformé pour exécuter le procédé suivant l'une des revendications 2 à 8.

**11.** Produit de programme d'ordinateur comprenant un code de programme pouvant être déchiffré par ordinateur, qui est conformé pour faire qu'un dispositif (1000) de traitement exécute les stades du procédé suivant l'une des revendications 1 à 8.

**12.** Support de mémoire déchiffrable par ordinateur, qui est conformé pour y mettre en mémoire un produit de programme d'ordinateur, qui comprend un code de programme déchiffrable par ordinateur, qui est conformé pour faire qu'un dispositif (1002) de traitement exécute les stades du procédé suivant l'une des revendications 1 à 8.

# FIG 1

[0,120]

P0

P1      P2

P3

# FIG 2

# FIG 3

FIG 4

FIG 5

FIG 6

FIG 7

FIG 8

# FIG 9

# FIG 10

# FIG 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- AN APPLICATION OF INTEGRATED CLUSTERING TO MRI SEGMENTATION. **VITO DI GESU et al.** PATTERN RECOGNITION LETTERS. ELSEVIER, 01 July 1994, vol. 15, 731-738

- Secure Anonymization for Incremental Datasets. **JI-WON BYUN et al.** SECURE DATA MANAGEMENT LECTURE NOTE$ IN COMPUTER SCIENCE; LNCS. SPRINGER, 01 January 2006, 48-63